(19) Europäisches Patentamt
European Patent Office
Office européen des brevets

(11) EP 1 199 764 A1

(12) **EUROPEAN PATENT APPLICATION**
published in accordance with Art. 158(3) EPC

(43) Date of publication:
**24.04.2002 Bulletin 2002/17**

(21) Application number: **00927838.3**

(22) Date of filing: **22.05.2000**

(51) Int Cl.[7]: **H01M 10/40**, H01M 2/16

(86) International application number:
**PCT/JP00/03259**

(87) International publication number:
**WO 00/72399 (30.11.2000 Gazette 2000/48)**

(84) Designated Contracting States:
**AT BE CH CY DE DK ES FI FR GB GR IE IT LI LU MC NL PT SE**

(30) Priority: **24.05.1999 JP 14276899**
**17.11.1999 JP 32678499**
**17.01.2000 JP 2000010295**
**17.01.2000 JP 2000010296**

(71) Applicant: **Yuasa Corporation**
**Takatsuki-shi, Osaka 569-1115 (JP)**

(72) Inventors:
- **NAKAGAWA, Hiroe, Yuasa Corporation Takatsuki-shi, Osaka 569-1115 (JP)**
- **IZUCHI, Syuichi, Yuasa Corporation Takatsuki-shi, Osaka 569-1115 (JP)**
- **KISHI, Takaaki, Yuasa Corporation Takatsuki-shi, Osaka 569-1115 (JP)**
- **WATANABE, Toshiyuki Yamato-shi, Kanagawa 242-0024 (JP)**

(74) Representative: **Stoner, Gerard Patrick et al**
**MEWBURN ELLIS**
**York House**
**23 Kingsway**
**London WC2B 6HP (GB)**

(54) **POLYMER ELECTROLYTE**

(57) In a polymer electrolyte having a structure in which an organic electrolyte is held in an organic polymer, the polymer electrolyte has following structures (i) through (iii).

(i) A skeleton of the organic polymer has a crosslink structure.
(ii) The organic polymer has a microporous structure.
(iii) The organic electrolyte is held by swelling in the skeleton of organic polymer, and also held in micropores.

According to this polymer electrolyte, a high ionic conductivity can be obtained and a stable structure can be kept for a long period.

*Fig.1*

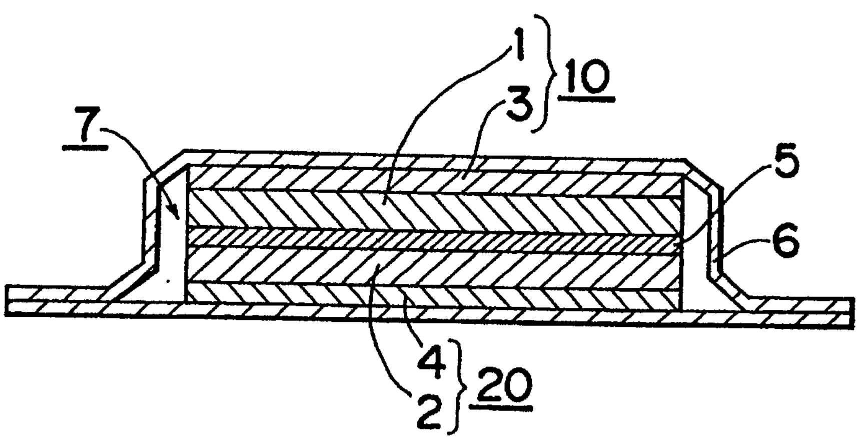




Printed by Jouve, 75001 PARIS (FR)

## Description

Technical Field

This invention relates to a polymer electrolyte and its manufacturing method, and in addition, to a polymer electrolyte battery and its manufacturing method.

Background Art

In recent years, concept of fabrication into compact-size and/or light-weight has been remarkable in portable instruments with a progress of electronic technology. This concept of fabrication into compact-size and/or light-weight has been required in batteries for use in power sources for these instruments, too.

A lithium battery is one which is expected to satisfy such a purpose. As for the lithium battery, studies have been made on a lithium polymer secondary battery using a polymer electrolyte in addition to a lithium ion secondary battery already put in practical use.

The lithium ion secondary battery is made up in such a process that; an electrode group composed of a positive electrode, a negative electrode and a separator, is inserted in a cylindrical or square container, and then a liquid-state electrolyte is poured in it. On the other hand, the lithium polymer secondary battery is made up in such a process that; the positive electrode and the negative electrode are opposed each other through the polymer electrolyte, and then packed together.

Incidentally, the lithium polymer secondary battery has included such defects as an inferior high-rate discharge performance and a short cycle life, as compared with the lithium ion secondary battery. Reasons for these facts can be considered as follows.

Since the liquid-state electrolyte is used for the lithium ion secondary battery, it is easy to keep lithium ion conductivities in the electrodes and separator at an order of $1 \times 10^{-3}$ S/cm which is said to be an ordinary level necessary for operation of battery. While, since the electrolyte is solid in the lithium polymer secondary battery, it is difficult to keep the lithium ion conductivities at an order of $1 \times 10^{-3}$ S/cm. Therefore, charge/discharge performances of the lithium polymer secondary battery have been inferior.

For this reason, a polymer electrolyte improved in its lithium ionic conductivity has been studied now. For such a polymer electrolyte; a gel electrolyte is examined widely which is composed by adding an organic electrolyte to an organic polymer having as its skeleton a polyethylene-oxide structure, a polyacrylonitrile structure and a polyvinylidene fluoride structure etc. For example, a polymer electrolyte having the polyethylene-oxide structure is proposed in JP-A-5117522 etc. Further, a polymer electrolyte having the polyacrylonitrile structure is proposed in JP-A-8264205. Moreover, a polymer electrolyte having the polyvinylidene fluoride structure is proposed in USP5296318, USP5418091 etc.

However, even if the foregoing polymer electrolytes were used, performances of the lithium polymer secondary battery were inferior to those of the lithium ion secondary battery. Reasons for these problems may be considered as follows.

(1) In the lithium battery using the polymer electrolyte having the polyethylene-oxide structure, a sufficient battery performance was exerted at time of low-rate discharging, but it was difficult to keep the battery performance at a sufficient level because of low lithium ion mobilty in the polymer electrolyte at time of high-rate discharging and low-temperature discharging. In addition, since the polyethylene-oxide structure had a property to restrict the lithium ion, the mobility of lithium ion was inhibited in the polymer electrolyte so that it was difficult to keep the repeated charge/discharge performances at sufficient levels.

(2) In the lithium battery using the polymer electrolyte having the polyacrylonitrile structure, a lithium ionic conductivity near to that of liquid electrolytes as compared with the polymer electrolyte having the polyethylene-oxide structure. However, it was also difficult to keep the battery performance at a sufficient level because of low lithium ion mobility at time of high-rate discharging and low-temperature discharging. Further, there was a possibility of liquid leakage because of inferiority in holding ability of electrolyte of the polymer electrolyte. Moreover, since the polymer electrolyte was thermoplastic, there was a possibility to cause a short-circuiting of battery due to dissolving of the electrolyte at high temperature. In addition, there was a possibility that the stable structure could not be maintained because the polymer electrolyte was subjected to irreversible crystallization and non-crystallization due to repeated temperature changes.

(3) In the lithium battery using the polymer electrolyte having the polyvinylidene fluoride structure, a form of microporous membrane is generally proposed as the polymer electrolyte. The lithium ion mobility can be improved to a practical level by a free liquid-state electrolyte existing in the microporous structure. However, its manufacturing process has been complicated due to necessity of a solvent extracting process so as to increase its manufacturing

cost. Further, there was a possibility of liquid leakage because of inferiority in holding ability of electrolyte of the polymer electrolyte. Moreover, since the polymer electrolyte was thermoplastic, there was a possibility to cause a short-circuiting of battery due to dissolving of the electrolyte at high temperature. In addition, there was a possibility that the stable structure could not be maintained because the polymer electrolyte was subjected to irreversible crystallization and non-crystallization due to repeated temperature changes.

On the other hand, a polymer electrolyte containing an organic polymer having a crosslink structure has been proposed in USP5429891 etc. particularly for the purpose of improving a heat-resistance. However, its problems of the complicated manufacturing process and the increase in manufacturing cost have not been solved yet.

A first object of this application is to provide a polymer electrolyte which can accomplish a smooth movement of ion (lithium ion, for example) to keep the ionic conductivity at least at an order of $1 \times 10^{-3}$ S/cm, and improve durability against high-temperature and durability against repeated temperature changes.

A second object of this application is to provide a manufacturing method for obtaining the polymer electrolyte described in the first object without requiring a complicated manufacturing process.

A third object of this application is to provide a polymer electrolyte battery which can keep a battery performance at a sufficient level not only at time of low-rate discharging but at time of high-rate discharging and low-temperature discharging, can improve durability against high-temperature and durability against repeated temperature changes, and further can exert long-life and stable battery performances.

A fourth object of this application is to provide a manufacturing method for obtaining the polymer electrolyte battery described in the third object without requiring a complicated manufacturing process.

Disclosure of Invention

In order to accomplish the first object, a first invention of this application is characterized by that, in a polymer electrolyte having a structure in which an organic electrolyte is held in an organic polymer, the polymer electrolyte is provided with following structures (i) through (iii).

(i) A skeleton of the organic polymer has a crosslink structure.
(ii) The organic polymer has a microporous structure.
(iii) The organic electrolyte is held by swelling in the skeleton of organic polymer, and also held in micropores.

In the polymer electrolyte of the first invention, a high ionic conductivity can be obtained by the foregoing structures (ii) and (iii). Reasons of this fact may be considered as follows. Movement of ion in an electrolyte is commanded by an ion in a free electrolyte of the electrolyte. In the polymer electrolyte of this invention, the organic electrolyte restricted by swelling in the skeleton of organic polymer and the free liquid-state electrolyte held in the micropores are mixed together microscopically. Accordingly, since the free organic electrolyte is held within the micropores in the polymer electrolyte of this invention, the movement of ion is positively commanded by this organic electrolyte. Therefore, the movement of ion becomes smooth so that a high ionic conductivity can be obtained. Owing to the structure (i), it becomes possible for the polymer electrolyte of this invention to improve durability against high-temperature and durability against repeated temperature changes, and to maintain its stable structure for a long period.

It is preferable that the first invention is further provided with following structures (1) and (2).

(1) A degree of swelling of the skeleton of organic polymer relative to the organic electrolyte lies within a range shown by an equation 1.

$$1 < \text{DEGREE OF SWELLING} = \frac{\text{WEIGHT OF ORGANIC POLYMER AFTER IMPREGNATION OF ORGANIC ELECTROLYTE}}{\text{WEIGHT OF ORGANIC POLYMER BEFORE IMPREGNATION OF ORGANIC ELECTROLYTE}} \leqq 2$$

…(EQUATION 1)

(2) A quantity of the organic electrolyte held in the micropores of organic polymer is larger than a quantity of the organic electrolyte held by swelling in the skeleton of organic polymer.

According to the above structure (1), a high ionic conductivity can be obtained more positively. Reasons of this fact may be considered as follows. When the degree of swelling of the skeleton of organic polymer is too large, the quantity of electrolyte held by swelling in the skeleton of organic polymer will become too large. Therefore, a large part of ion movement in the polymer electrolyte is burdened by the ion in the electrolyte restricted by swelling in the skeleton of organic polymer. Consequently, it becomes hard for the ion in the polymer electrolyte to move.

According to the above structure (2), a high ionic conductivity can be obtained more positively. The reason is that, since a large part of ion movement in the polymer electrolyte is burdened by the ion in the free state organic electrolyte held in the micropores of organic polymer, it becomes easy for the ion to move smoothly.

In order to accomplish the above second object, a second invention of this application is characterized by that, in a manufacturing method for a polymer electrolyte having a structure in which an organic electrolyte is held in an organic polymer, the manufacturing method includes;

a dissolving process for making up a monomer solution by dissolving a monomer having a polymerizing functional group in its molecule into an organic electrolyte, and

a polymerizing process in which an organic polymer is formed by crosslinking the monomer in monomer solution through polymerization and at the same time the organic electrolyte is impregnated into the organic polymer, and the method uses as the monomer

a monomer having following properties (a) and (b) in one molecule, or a mixture of a monomer having the property (a) and a monomer having the property (b),

(a) having an affinity for the solvent of organic electrolyte.
(b) decreasing a solubility for the organic solvent of organic electrolyte at time of polymerization.

According to the above second invention, the polymer electrolyte of the foregoing first invention can be obtained. In the second invention, since the monomer has the above property (b), phase separation occurs between the solvent and the monomer when the organic polymer is formed. Therefore, the microporous structure is created in the organic polymer. On the other hand, since the monomer has the above property (a), the organic electrolyte is held by swelling in the skeleton of organic polymer. Consequently, in the polymerizing process, the organic electrolyte is held by swelling in the skeleton of organic polymer and held within the micropores too. Since the organic polymer is formed by crosslinking the monomer through polymerization, it has the crosslink structure.

In order to accomplish the above second object, a third invention of this application is characterized by that, in a manufacturing method for a polymer electrolyte having a structure in which an organic electrolyte is held by an organic polymer, the manufacturing method includes;

a dissolving process for making up a monomer solution by dissolving a monomer having a polymerizing functional group in its molecule into a solvent,

a polymerizing process in which an organic polymer is formed by crosslinking the monomer in monomer solution

through polymerization,

a drying process for removing the above solvent contained in the organic polymer, and

an impregnating process for impregnating the organic electrolyte into the organic polymer, and the method uses as the monomer

a monomer having following properties (a) and (b) in one molecule, or a mixture of a monomer having the property (a) and a monomer having the property (b).

(a) having an affinity for the solvent of organic electrolyte.
(b) decreasing a solubility for the solvent for use in the dissolving process at time of polymerization.

According to the above third invention, the polymer electrolyte of the foregoing first invention can be obtained. In the third invention, since the monomer has the above property (b), phase separation occurs between the solvent and the monomer when the organic polymer is formed. Therefore, the microporous structure is created within the organic polymer in the polymerization process. On the other hand, since the monomer has the above property (a), the organic electrolyte is held by swelling in the skeleton of organic polymer. Consequently, in the impregnation process, the organic electrolyte is held by swelling in the skeleton of organic polymer and held within the micropores too. Since the organic polymer is formed by crosslinking the monomer through polymerization, it has the crosslink structure.
According to the above second and third inventions, the polymer electrolyte of the first invention can be obtained without requiring troublesome manufacturing processes such as the solvent extracting process.
The above-mentioned property (a) of monomer can be presented by containing the structure having a high affinity for the solvent of organic electrolyte. As for the structure having a high affinity; an ether group such as ethylene oxide, polypropylene oxide etc., and an ester group etc. may be mentioned, for example. However, the structure is not limited to them. While, the above-mentioned property (b) of monomer can be presented by containing the structure having a low affinity for the solvent of organic electrolyte or a solvent for use in the dissolving process. As for the structure having a low affinity; alkyl chain, fluoroalkyl chain and benzene skeleton etc. may be mentioned, for example. However, the structure is not limited to them.
In order to obtain the foregoing structure (1) of the first invention, it is required in the used monomer to properly determine a rate of strength between the properties (a) and (b) . For example, the degree of swelling becomes small when a monomer having weak property (a) is used. In case where two or more kinds of mixed monomers are used, the degree of swelling becomes small when a large quantity of monomer having weak property (a) is used.
The structure (1) of the first invention can also be obtained by properly determining a crosslink density of the organic polymer. The crosslink density of organic polymer depends on a molecular weight of the monomer or the number of functional group contained in the monomer. The degree of swelling becomes small when using a monomer containing a small molecular weight and a large number of functional group. For example, when a monomer containing a molecular weight smaller than 1,000 and a number of functional group of 2, the degree of swelling can be determined to 2 or smaller.
The structure (2) of the first invention can be obtained by determining the property (b) to a proper strength. When a lowering extent of the solubility in the property (b) is large, a microporous structure is formed at a high percentage in relation to an uniform structure and a diameter of micropore becomes comparatively large. In this instance, the uniform structure means a structure in which the organic polymer is not provided with the microporous structure but is formed uniformly. In case where the microporous structure is formed at a high percentage and the diameter of micropore is large in the organic polymer, a quantity of the organic electrolyte held in the micropore becomes larger than a quantity of the organic electrolyte held by swelling in the skeleton of organic polymer, when the organic electrolyte is impregnated into the organic polymer. The lowering extent of solubility in the property (b) depends on a difference of hydrophilicities between the monomer and the solvent of the organic electrolyte or the solvent for use in the dissolving process. Consequently, it is necessary to use a solvent including a high hydrophobicity when a monomer including a high hydrophilicity is used. On the contrary, it is necessary to use a solvent including a high hydrophilicity when a monomer including a high hydrophobicity is used.
Generally in the polymerizing process, the monomer solution is cast or coated on a stainless foil etc. to form a film, in the first stage. Then, this film is irradiated with electron beam or ultraviolet ray, or heated so as to polymerize the monomer, in the next stage.
For the solvent of organic electrolyte, those which are generally used for the lithium battery and stable in chemical characteristics, can be used. For example; ethylene carbonate, propylene carbonate, dimethyl carbonate, diethyl carbonate, methyl-ethyl carbonate, γ -butyrolactone, propiolactone, valerolactone, tetrahydrofuran, dimethoxyethane, diethoxy-ethane, methoxy-ethoxy-ethane etc. may be mentioned. However, the solvent is not limited to them. Especially, it is desirable to use the γ -butyrolactone independently or by being mixed with another compound. Because the γ -butyrolactone is provided with a high dielectric constant, a low steam pressure, a low inflammability, a comparatively small viscosity, and particularly a good high-rate discharge characteristic when combined with $LiBF_4$ salt having

a good thermal stability. A content of γ-butyrolactone preferably ranges from 20 to 90 wt%, and especially preferably ranges from 30 to 70 wt%.

For the salt of organic electrolyte, a lithium salt which is generally used for the lithium battery and stable in a wide potential region, can be used. For example, $LiBF_4$, $LiPF_6$, $LiClO_4$ , $LiSO_3CF_3$, $LiN(SO_2CF_3)_2$, $LiN(SO_2CF_3)(SO_2C_4F_9)$ etc. may be used independently or by being mixed in two or more kinds. Especially, it is desirable to use the $LiBF_4$. The reason is that it becomes easy to obtain a lithium battery excellent in its safety because the $LiBF_4$ can exert a good thermal stability and gives rise to little such a problem as generation of hydrogen fluoride due to hydrolysis when water is mixed in it. Particularly, when two or more kinds of lithium salts are used, it is preferable to use 50 or larger mol% of $LiBF_4$.

For the solvent used in the dissolving process of the third invention, those generally used and stable in chemical characteristic may be used. For example, methanol, ethanol, propanol, butanol, acetone, toluene, acetonitrile, hexane etc. may be used. However, the solvent is not limited to them. Depending on each case, water may be use. These solvents may be used independently or by being mixed in two or more kinds.

For the polymerizing functional group in molecule; acrylate, methacrylate, allyl-ether, stylene etc. may be mentioned. Especially from an aspect of polymerization reactivity, the acrylate is appropriately.

In order to crosslink the monomer, the monomer is required to contain two or more functional groups.

The second or third inventions may be provided with following structures (3), (4), and (5).

(3) monomers optionally selected from compounds shown in equation (A) are used for the monomer.

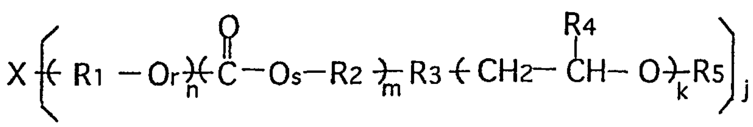 ··· (A)

**X: j-valent connecting group**

$R_1$ : $-C_pH_{2p}-$ p=0~10

$R_2$ : $-C_qH_{2q}-$ q=0~10

$R_3$ : $-C_tH_{2t}-$ t=0~10

$R_4$ : $C_vH_{2v+1}$ v=0~5

R5 : 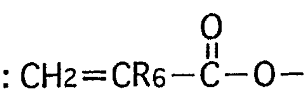

$R_6$ : $C_wH_{2w+1}$ w=0~5

**r,s: s=1 when r=0, s=0 when r=1**

j = 1~6 m= 0~3 k= 1~500 n= 0~20

The j-valent connecting group X are exemplified as follows.

$C_xH_yF_z$- x=1~10, y+z=2x+1

$-C_xH_yF_z$- x=1~10, y+z=2x

$-C_xH_yF_z$< x=1~10, y+z=2x-1

>$C_xH_yF_z$< x=1~10, y+z=2x-2

$-CH_2O-$

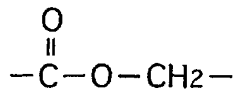

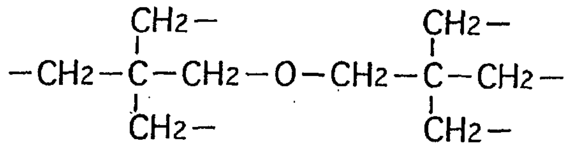

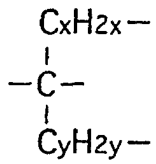

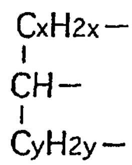

x,y=1～10

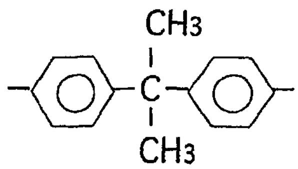

(4) an inorganic filler is mixed in the dissolving process.

(5) a base material utilizing process in which the monomer solution is impregnated in or coated or cast on a porous base material, is provided in advance of the polymerizing process.

According to the structure (3), the polymer electrolyte having the microporous structure can easily be obtained.

According to the structure (4), the microporous structure can be formed and held more easily as compared with a case where the inorganic filler is not added.

According to the structure (5), the microporous structure can be formed and held more easily as compared with a case where the porous base material is not used.

For the inorganic filler, a fine-grain metal compound which is stable in chemical and electrochemical characteristics and forms a matrix together with the skeleton of organic polymer, can be used in the same way as the porous base material. For example; metal oxides such as silicon oxide, titanium oxide, aluminum oxide, magnesium oxide, zirconium oxide, zinc oxide, iron oxide etc. and metal carbonates such as calcium carbonate, magnesium carbonate etc., may be used. However, the compound is not limited to them.

For the porous base material; a porous thin-film which is generally used for separators for various liquid-type batteries, may be used. For example; microporous membrane, non-woven fabric, woven fabric may be used as they are. The porous base material is preferably one, which is chemically stable against the solvent and electrolyte and is electrochemically stable. For example; those containing major material of polyolefin such as polyethylene, polypropylene etc., those containing major material of polyester such as polyethylene-terephthalate, polybutylene-terephthalate etc., and those containing major material of cellulose etc., may be used. However. The material is not limited to them.

In order to accomplish the third object, a fourth invention of this application is characterized by that, in a polymer electrolyte battery containing as its composition material a polymer electrolyte having a structure in which an organic electrolyte is held in an organic polymer,

the polymer electrolyte contained in at least one of a positive electrode, a negative electrode and a separator, is

provided with following structures (i) through (iii).

(i) A skeleton of the organic polymer has a crosslink structure.
(ii) The organic polymer has a microporous structure.
(iii) The organic electrolyte is held by swelling in the skeleton of organic polymer and also held in micropores.

According to the fourth invention, a discharge rate characteristic and charge/discharge cycle characteristic can be improved, so that the battery performance can be kept at a sufficient level not only at time of low-rate discharging but at time of high-rate discharging and low-temperature discharging. The reason is that the movement of ion can be carried out smoothly in the separator because the polymer electrolyte contained in the separator, for example, is provided with the structures (ii) and (iii). In the polymer electrolyte having the uniform structure, a concentration gradient is created by a difference of mobilities between cation and anion, at time of charging and discharging. This concentration gradient causes a penetration flowing, creates an omnipresence of the electrolyte, and deteriorates a cycle life of the battery. However, since the polymer electrolyte of this invention is provided with the microporous structure, the free-state electrolyte can be held in the micropores. Consequently, the cation (lithium ion, for example) can move smoothly in the polymer electrolyte of this invention.
Further, according to the fourth invention, the durability against high-temperature and the durability against repeated temperature changes can be improved. Because the polymer electrolyte contained in the separator, for example, is provided with the above structure (i).
The above fourth invention is preferably further provided with following structures (6), (7) and (8).

(6) A degree of swelling of the skeleton of organic polymer relative to the organic electrolyte lies within a range shown by an equation 1.

$$1 < \text{DEGREE OF SWELLING} = \frac{\text{WEIGHT OF ORGANIC POLYMER AFTER IMPREGNATION OF ORGANIC ELECTROLYTE}}{\text{WEIGHT OF ORGANIC POLYMER BEFORE IMPREGNATION OF ORGANIC ELECTROLYTE}} \leqq 2 \quad \cdots\text{(EQUATION 1)}$$

(7) A quantity of the organic electrolyte held in the micropores of organic polymer is larger than a quantity of the organic electrolyte held by swelling in the skeleton of organic polymer.

(8) A battery package is composed of a composite film comprising a metal foil and an adhesive resin.

Functions of the structures (6) and (7) are similar to those provided by the structures (1) and (2) of the first invention.
According to the structure (8), an energy density can be improved. The reasons are as follows. Since the battery using the polymer electrolyte has a good liquid holding ability, there is no possibility of liquid leakage. Therefore, the electrode group can be sealed closely by the composite film comprising the metal foil and adhesive resin. Consequently, the energy density can be improved because a practical space of the electrode group can be increased.
For the composite film, an aluminum laminated film is generally used.
In order to accomplish the fourth object of this application, a fifth invention of this application is characterized by that, in a manufacturing method for a polymer electrolyte battery having as its composition material a polymer electrolyte provided with a structure in which an organic electrolyte is held in an organic polymer, the manufacturing method includes;

a containing process in which a polymer electrolyte provided with following structures (i) through (iii) is contained in at least one of a positive electrode, a negative electrode and a separator, and an organic electrolyte is contained in

the other components,

(i) A skeleton of the organic polymer has a crosslink structure.
(ii) The organic polymer has a microporous structure.
(iii) The organic electrolyte is held by swelling in the skeleton of organic polymer and also held in micropores.

a laminating process in which an electrode group is composed by the positive electrode, the negative electrode and the separator, and

an assembling process in which the electrode group is assembled in a battery container.

In order to accomplish the fourth object of this application, a sixth invention of this application is characterized by that, in a manufacturing method for a polymer electrolyte battery having as its composition material a polymer electrolyte provided with a structure in which an organic electrolyte is held in an organic polymer, the manufacturing method includes;

a containing process in which an organic polymer provided with following structures (i) through (ii) is contained in at least one of a positive electrode, a negative electrode and a separator,

(i) A skeleton of the organic polymer has a crosslink structure.
(ii) The organic polymer has a microporous structure.

a laminating process in which an electrode group is composed by the positive electrode, the negative electrode and the separator,

an impregnating process in which the organic electrolyte is impregnated in the electrode group, and thereby the electrolyte is held by swelling in the skeleton of organic polymer provided with the structures (i) and (ii) and also held in micropores of the organic polymer, and

an assembling process in which the electrode group is assembled in a battery container.

According to the fifth or sixth invention, the polymer electrolyte battery of the fourth invention can be obtained without requiring a troublesome manufacturing process such as the solvent extracting process.

For the polymer electrolyte battery, the lithium battery may be mentioned as its major example. However, a battery using a protic electrolyte such as a nickel-metal hydride battery may be mentioned.

Brief Description of Drawings

Fig. 1 is a vertical sectional view for lithium batteries of embodiments 14 through 30. Fig. 2 is a graph showing discharge rate characteristics for lithium batteries of embodiments 14 through 17 and comparison embodiments 4 & 5. Fig. 3 is a graph showing discharge rate characteristics for lithium batteries of embodiments 18 through 21 and comparison embodiment 6. Fig. 4 is a graph showing charge/discharge cycle characteristics for lithium batteries of embodiments 18 through 21 and comparison embodiment 6. Fig. 5 is a graph showing discharge rate characteristics for lithium batteries of embodiments 22 through 27 and comparison embodiments 7 & 8. Fig. 6 is a graph showing charge/discharge cycle characteristics for lithium batteries of embodiments 22 through 27 and comparison embodiments 7 & 8. Fig. 7 is a graph showing discharge rate characteristics for lithium batteries of embodiments 28 through 30 and comparison embodiment 9. Fig. 8 is a graph showing charge/discharge cycle characteristics for lithium batteries of embodiments 28 through 30 and comparison embodiment 9.

Best Mode for Carrying Out the Invention

Embodiments 1 through 13 relate to the polymer electrolyte and its manufacturing method of this invention.

(Embodiment 1)

The polymer electrolyte of this embodiment was manufactured as follows.

The dissolving process was carried out first as follows. 3 grams of the monomer shown by the equation (I) were completely dissolved in 12 grams of organic electrolyte which was prepared by dissolving 1 mol of $LiBF_4$ into 1 litter of γ-butyrolactone. Thus, a monomer solution was made up.

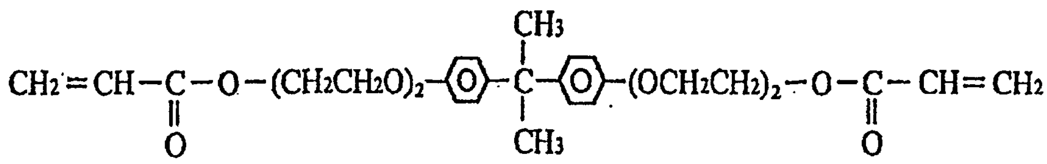

...... ( I )

Then, the polymerizing process was carried out as follows. The monomer solution was cast on a stainless foil, and irradiated with electron beam. Thereby, the monomer in the monomer solution was polymerized to form an organic polymer and the organic electrolyte was impregnated into the organic polymer.

Thus, a polymer electrolyte A1 having a film thickness of 100 μm was prepared.

The monomer shown by the equation (I) is provided with two structures: a polyethylene oxide structure having a high affinity for γ -butyrolactone forming the solvent of organic electrolyte for use in the dissolving process, and a bisphenol A structure having a low affinity for it.

The dried organic polymer was prepared by drying the polymer electrolyte A1 and removing the organic electrolyte. Its surface and section were observed by using a scanning electron microscope(SEM), and it was confirmed that a microporous structure having an average pore diameter of about 0.2 μm was formed. This implies that the organic polymer of polymer electrolyte A1 was provided with the microporous structure.

The reason why the organic polymer was provided with the microporous structure may be considered as follows. Since the monomer shown by the equation (I) is provided with the structure having a low affinity for the solvent of organic electrolyte, the monomer and the solvent cause phase separation each other microscopically at time of forming the organic polymer.

An ionic conductivity of the polymer electrolyte A1 at 20°C was measured by means of the alternating current impedance method, and it was $3.2 \times 10^{-3}$ S/cm. Thus, a high ionic conductivity was obtained.

The reason why the polymer electrolyte A1 presents such a high ionic conductivity as mentioned above, may be considered as follows. Since the monomer is provided with the structure having a high affinity for the solvent of organic electrolyte, the organic electrolyte is held by swelling in the skeleton of organic polymer. On the other hand, since the organic polymer is provided with the microporous structure, the organic electrolyte is held in the micropores in a form of free liquid-state electrolyte. Accordingly, in the polymer electrolyte A1, the organic electrolyte comes to a state in which the organic electrolyte restricted by swelling in the skeleton of organic polymer is microscopically mixed with the free liquid-state electrolyte held in the micropores. In this instance, the movement of lithium ion is commanded by the lithium ion in the free liquid-state electrolyte. Consequently, a high ionic conductivity can be obtained in the polymer electrolyte A1, because the movement of lithium ion is commanded by the organic electrolyte held in the micropores.

Since the monomer shown by the equation (I) has two functional groups, the skeleton of organic polymer is provided with the crosslink structure. Therefore, the polymer electrolyte A1 is excellent in the durability against high-temperature and durability against repeated temperature changes, so that it can maintain the stable structure for a long period.

The above-mentioned manufacturing method only includes the dissolving process and the polymerizing process, and does not include a troublesome process such as the solvent extraction process. Therefore, according to the above manufacturing method, the polymer electrolyte A1 can be obtained without requiring a troublesome manufacturing method.

(Comparison embodiment 1)

This comparison embodiment is examined in relation to the embodiment 1.

The material and method same as those of the embodiment 1 were used except that a monomer shown by an equation (II) was used in place of the monomer shown by the equation (I). Thereby, a polymer electrolyte B1 having a film thickness of 100 μm was prepared.

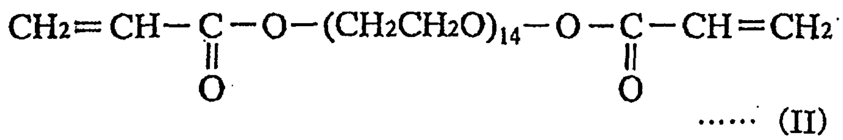

...... (II)

Almost all part of the monomer shown by the equation (II) is composed of the polyethylene oxide structure which is a structure having a high affinity for γ-butyrolactone forming the solvent of organic electrolyte, and the monomer scarcely contains a structure having a low affinity for γ-butyrolactone.

The dried organic polymer was prepared by drying the polymer electrolyte B1 and removing the organic electrolyte. Its surface and section were observed by using the SEM, so that the microporous structure was not recognized but an uniform structure was recognized. The uniform structure means a structure in which the polymer electrolyte is formed uniformly without containing the microporous structure. Namely, the organic polymer of the polymer electrolyte B1 was not provided with the microporous structure.

The reason why the organic polymer contained the uniform structure as mentioned above, may be considered as follows. Since almost all of the monomer shown by the equation (II) is composed of the structure having a high affinity for the solvent of organic electrolyte, phase separation does not occur between the monomer and the solvent at time of forming the organic polymer.

An ionic conductivity of the polymer electrolyte B1 at 20°C was measured by means of the alternating current impedance method, and it was $1.2 \times 10^{-3}$ S/cm. Namely, only a low ionic conductivity was obtained as compared with the polymer electrolyte A1.

The reason why the polymer electrolyte B1 presents such a low ionic conductivity as mentioned above, may be considered as follows. (1) Since the organic polymer is provided with the uniform structure, the organic electrolyte is restricted by swelling in the skeleton of organic polymer. For this reason, the movement of lithium ion in the polymer electrolyte B1 is limited in the skeleton of organic polymer. Consequently, the lithium ionic conductivity must become small. (2) Since the polyethylene oxide structure in the polymer electrolyte B1 restricts the lithium ion, the movement of lithium ion in the polymer electrolyte B1 is inhibited so that the movement of lithium ion becomes difficult. Therefore, the ionic conductivity becomes small.

(Comparison embodiment 2)

This comparison embodiment is examined in relation to the embodiment 1.

The material and method same as those of the embodiment 1 were used except that a monomer shown by an equation (III) was used in place of the monomer shown by the equation (I). Thereby, a polymer electrolyte B2 having a film thickness of 100 μm was prepared.

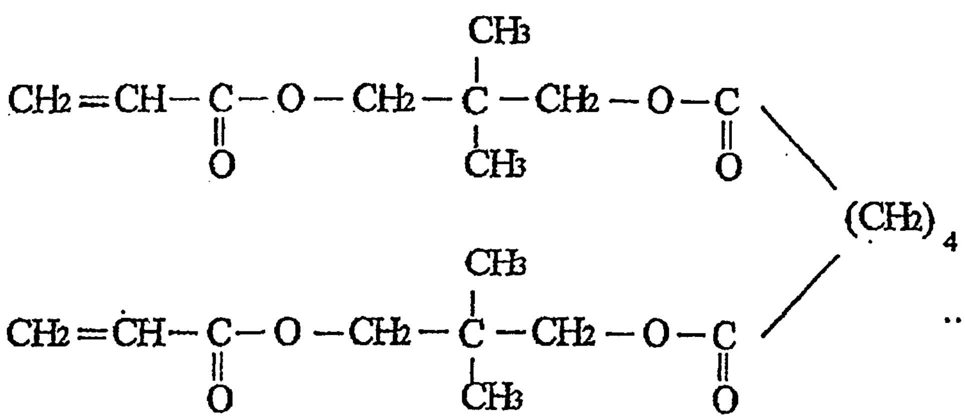

...... (III)

The monomer shown by the equation (III) is provided with a structure having a comparatively high affinity for γ-butyrolactone forming the solvent of organic electrolyte.

The dried organic polymer was prepared by drying the polymer electrolyte B2 and removing the organic electrolyte. Its surface and section were observed by using the SEM, so that the microporous structure was not recognized

but an uniform structure was recognized. Namely, the organic polymer of the polymer electrolyte B2 was not provided with the microporous structure.

The reason why the organic polymer contained the uniform structure as mentioned above, may be considered as follows. Since the monomer shown by the equation (III) has a comparatively high affinity for the solvent of organic electrolyte, phase separation does not occur between the monomer and the solvent at time of forming the organic polymer.

An ionic conductivity of the polymer electrolyte B2 at 20°C was measured by means of the alternating current impedance method, and it was $1.5 \times 10^{-3}$ S/cm. Namely, only a low ionic conductivity was obtained as compared with the polymer electrolyte A1.

The reason why the polymer electrolyte B2 presents such a low ionic conductivity as mentioned above, may be caused by the same reason as the case of polymer electrolyte B1.

(Embodiment 2)

The polymer electrolyte of this embodiment was manufactured in the following manner.

The dissolving process was carried out first as follows. 3 grams of the monomer shown by the equation (I) were completely dissolved in 12 grams of acetonitrile forming a solvent. Thus, a monomer solution was made up.

Then, the polymerizing process was carried out as follows. The monomer solution was cast on the stainless foil, irradiated with electron beam. Thereby, the monomer in the monomer solution was polymerized to form an organic polymer.

Then, the drying process was carried out as follows. The above-mentioned solvent contained in the organic polymer was dried and removed, so that a dried organic polymer having a film thickness of 100 µm were prepared.

Then, the impregnating process was carried out as follows. The dried organic polymer was dipped in an organic electrolyte prepared by dissolving 1 mol of $LiBF_4$ in 1 litter of γ-butyrolactone, so that the organic polymer was sufficiently impregnated with the organic electrolyte.

Thus a polymer electrolyte A2 was prepared.

The monomer shown by the equation (I) is composed of a polyethylene oxide structure which is the structure having a high affinity for acetonitrile forming the solvent for use in the dissolving process, and a bisphenol A structure having a low affinity for it.

A surface and section of the dried organic polymer prepared by the drying process were observed by using the SEM, so that a microporous structure having an average pore diameter of about 0.5 µm was recognized. This implies that the organic polymer of polymer electrolyte A2 contained the microporous structure.

The reason why the organic polymer contained the microporous structure as mentioned above, may be considered as follows. Since the monomer shown by the equation (I) is provided with the structure having a low affinity for the solvent for use in the dissolving process, the monomer and the solvent give rise to phase separation microscopically at time of forming the organic polymer.

An ionic conductivity of the polymer electrolyte A2 at 20°C was measured by means of the alternating current impedance method, and it was $3.8 \times 10^{-3}$ S/cm. Thus, a high ionic conductivity was obtained.

The reason why the polymer electrolyte A2 presents such a high ionic conductivity as mentioned above, may be caused by the same reason as the case of polymer electrolyte A1.

Since the monomer shown by the equation (I) has two functional groups, the skeleton of organic polymer is provided with the crosslink structure. Therefore, the polymer electrolyte A2 is excellent in the durability against high-temperature and durability against repeated temperature changes, so that it can maintain the stable structure for a long period.

The above-mentioned manufacturing method only includes the dissolving process, the polymerizing process, the drying process and the impregnating process, and does not include a troublesome process such as the solvent extracting process. Therefore, according to the above manufacturing method, the polymer electrolyte A2 can be obtained without requiring a troublesome manufacturing method.

(Embodiment 3)

The polymer electrolyte of this embodiment was manufactured as follows.

The dissolving process was carried out first as follows. 3 grams of the monomer shown by the equation (III) were completely dissolved in 12 grams of ethanol forming the solvent. Thus, a monomer solution was made up.

Then, the polymerizing process, the drying process and the impregnating process were carried out in the same way as the embodiment 2.

Thus a polymer electrolyte A3 was prepared.

The monomer shown by the equation (III) has a low affinity for ethanol forming the solvent for use in the

dissolving process.

A surface and section of the dried organic polymer prepared by the above drying process were observed by using the SEM, so that a microporous structure having an average pore diameter of about 0.5 μm was recognized. This implies that the organic polymer of polymer electrolyte A3 contained the microporous structure.

The reason why the organic polymer contained the microporous structure as mentioned above, may be considered as follows. Since the monomer shown by the equation (III) has a low affinity for the solvent for use in the dissolving process, the monomer and the solvent give rise to phase separation microscopically at time of forming the organic polymer.

An ionic conductivity of the polymer electrolyte A3 at 20°C was measured by means of the alternating current impedance method, and it was $3.8 \times 10^{-3}$ S/cm. Thus, a high ionic conductivity was obtained.

The reason why the polymer electrolyte A3 presents such a high ionic conductivity as mentioned above, may be caused by the same reason as the case of polymer electrolyte A1.

Since the monomer shown by the equation (III) has two functional groups, the skeleton of organic polymer is provided with the crosslink structure. Therefore, the polymer electrolyte A3 is excellent in the durability against high-temperature and durability against repeated temperature changes, so that it can maintain the stable structure for a long period.

According to the above-mentioned manufacturing method, the polymer electrolyte A3 can be obtained without requiring a troublesome manufacturing method, in the same way as the embodiment 2.

(Embodiments 4 through 6)

The material and method same as those of the embodiment 2 were used except that monomers and solvents shown in Table 1 were used in the dissolving process. Thereby, polymer electrolytes A4 through A6 were prepared.

[TABLE 1]

| EMBODIMENT | POLYMER ELECTROLYTE | MONOMER | SOLVENT | IONIC CONDUCTIVITY (S/cm) | RESULT OF OBSERVATION BY SEM |
|---|---|---|---|---|---|
| 4 | A 4 | EQUATION (I) | METHANOL | $3.2 \times 10^{-3}$ | MICROPOROUS STRUCTURE AVERAGE PORE DIAMETER ABOUT 0.3 μm |
| 5 | A 5 | EQUATION (IV) | METHANOL | $3.6 \times 10^{-3}$ | MICROPOROUS STRUCTURE AVERAGE PORE DIAMETER ABOUT 0.5 μm |
| 6 | A 6 | EQUATION (V) | ETHANOL | $2.5 \times 10^{-3}$ | MICROPOROUS STRUCTURE AVERAGE PORE DIAMETER ABOUT 0.1 μm |

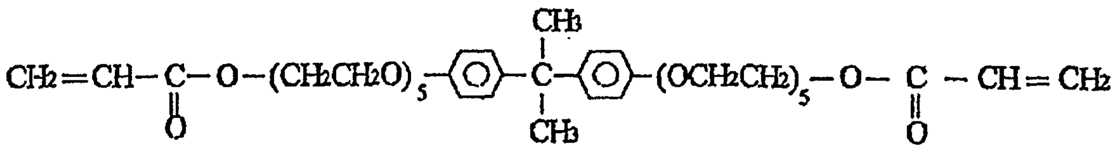

...... (IV)

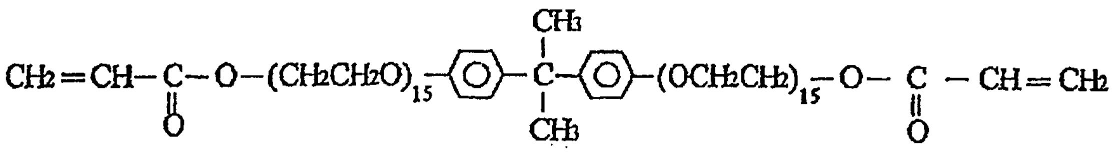

...... (V)

The monomers shown by the equation (I) and the equation (IV) have a low affinity for the methanol forming the solvent for use in the dissolving process, and the monomer shown by the equation (V) has a low affinity for the ethanol forming the solvent for use in the dissolving process.

Surfaces and sections of the dried organic polymers prepared by the drying process were observed by using the SEM, so that microporous structures having average pore diameters shown in Table 1 were recognized. This implies that the organic polymers of polymer electrolytes A4 through A6 contained the microporous structures.

The reason why the organic polymers contained the microporous structures as mentioned above, may be considered as follows. Since the respective monomers shown by the equations (I), (IV) & (V) have low affinities for the solvent for use in the dissolving process, the monomers and the solvents give rise to phase separation microscopically at time of forming the organic polymers.

Ion conductivities of the polymer electrolytes A4 through A6 at 20°C measured by means of the alternating current impedance method were such large values as shown in Table 1.

The reason why the polymer electrolytes A4 through A6 present such high ion conductivities as mentioned above, may be caused by the same reason as the case of polymer electrolyte A1.

Since the respective monomers shown by the equations (I), (IV) & (V) have two functional groups, the skeletons of organic polymers are provided with the crosslink structures. Therefore, the polymer electrolytes A4 through A6 are excellent in the durability against high-temperature and durability against repeated temperature changes, so that they can maintain the stable structures for a long period.

According to the above-mentioned manufacturing methods, the polymer electrolytes A4 through A6 can be obtained without requiring a troublesome manufacturing method, in the same way as the embodiment 2.

(Embodiments 7 through 11)

The material and method same as those of embodiment 2 were used except that monomers and solvents shown in Table 2 were used in the dissolving process. Thereby, polymer electrolytes A7 through A11 were prepared.

[TABLE 2]

| EMBODIMENT | POLYMER ELECTROLYTE | MONOMER | SOLVENT | EXISTENCE OF MICROPOROUS STRUCTURE |
|---|---|---|---|---|
| 7 | A 7 | EQUATION (VII) | ETHANOL + DIMETHYL CARBONATE | EXIST |
| 8 | A 8 | EQUATION (VIII) | ETHANOL | EXIST |
| 9 | A 9 | EQUATION (IX) | ETHANOL | EXIST |
| 1 0 | A 1 0 | EQUATION (X) | ETHANOL | EXIST |
| 1 1 | A 1 1 | EQUATION (XI) | ETHANOL + DIMETHYL CARBONATE | EXIST |

$$CH_2{=}CH-\underset{\underset{O}{\|}}{C}-O-(CH_2)_6-O-\underset{\underset{O}{\|}}{C}-CH{=}CH_2 \quad \cdots \text{(VII)}$$

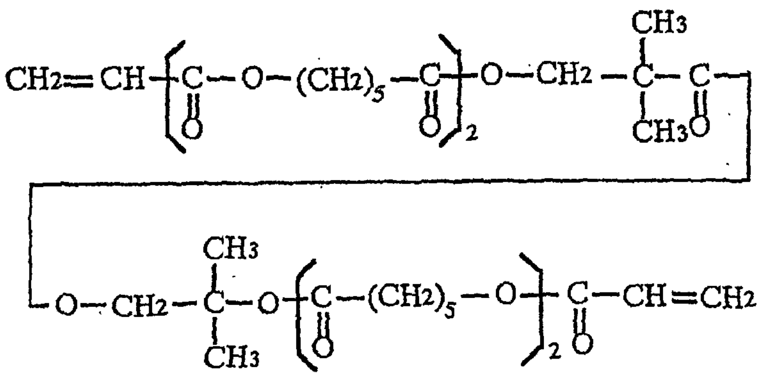

··· (VIII)

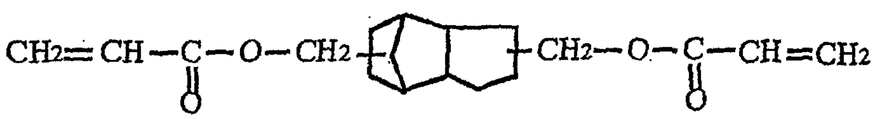

··· (IX)

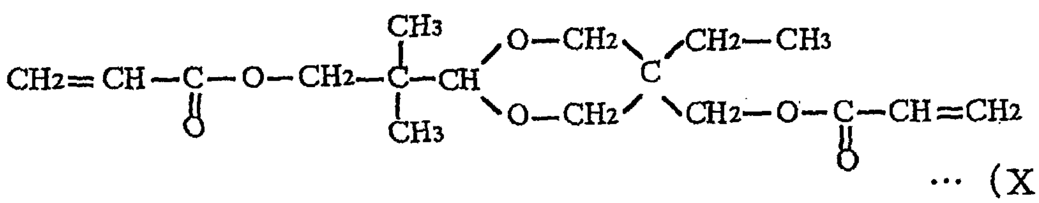

··· (X)

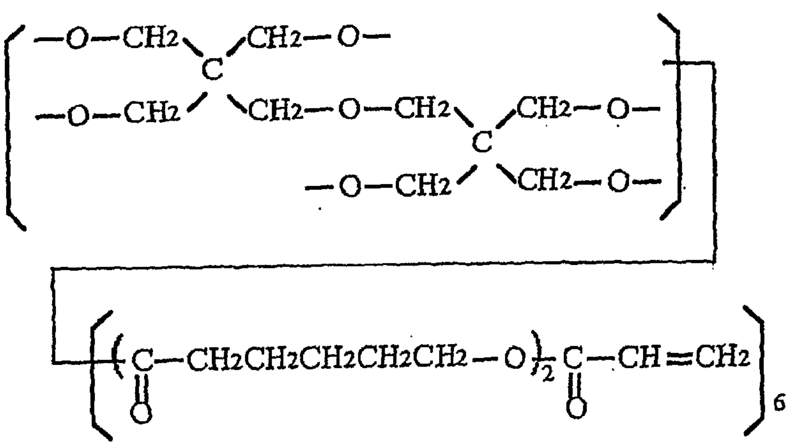

··· (XI)

Incidentally, monomers shown by the equations (VII) through (XI) were selected from compounds shown in equation (A) .

A surface and section of the dried organic polymer prepared by the drying process were observed by using the SEM, so that a microporous structure was recognized. This implies that the organic polymer of polymer electrolytes A7 through A11 contained the microporous structure.

The reason why the organic polymer contained the microporous structure may be considered by the same reason as the embodiment 3.

Since respective monomer shown by the equations (VII) through (XI) have two or more functional groups, the

skeleton of organic polymer is provided with the crosslink structure. Therefore, the polymer electrolytes A7 through A11 are excellent in the durability against high-temperature and durability against repeated temperature changes, so that it can maintain the stable structure for a long period.

According to the above-mentioned manufacturing methods, the polymer electolytes A7 through A11 can be obtained without requiring a troublesome manufacturing method, in the same way as the embodiment 2.

(Embodiment 12)

The polymer electrolyte of this embodiment was manufactured as follows.

The dissolving process was carried out first as follows. 3 grams of the monomer shown by the equation (III) were mixed with 12 grams of ethanol forming the solvent and 0.3 g of silicon oxide powder forming the inorganic filler, and the monomer was completely dissolved in the solvent. Thus, a monomer solution was made up.

Then, the polymerizing process, the drying process and the impregnating process were carried out in the same way as the embodiment 2.

Thus, a polymer electrolyte A12 having a film thickness of 100 μm was prepared.

A surface and section of the dried organic polymer prepared by the drying process were observed by using the SEM, so that a microporous structure having an average pore diameter of about 1.0 μm was recognized. This implies that the organic polymer of polymer electrolyte A12 contained the microporous structure.

The reason why the organic polymer is provided with the microporous structure as mentioned above, may be caused by the same reason as the case of embodiment 3.

An ionic conductivity of the polymer electrolyte A12 at 20°C measured by means of the alternating current impedance method was $3.6 \times 10^{-3}$ S/cm. Thus, a high ionic conductivity was obtained.

The reason why the polymer electrolyte A12 presents such a high ionic conductivity as mentioned above, may be caused by the same reason as the case of polymer electrolyte A3.

Since the monomer shown by the equation (III) has two functional groups, the skeleton of organic polymer is provided with the crosslink structure. Therefore, the polymer electrolyte A12 is excellent in the durability against high-temperature and durability against repeated temperature changes, so that it can maintain the stable structure for a long period.

According to the above-mentioned manufacturing method, the polymer electrolyte A12 can be obtained without requiring a troublesome manufacturing method, in the same way as the embodiment 2.

In addition, since the inorganic filler is added in the dissolving process, it becomes easy to form and maintain the microporous structure as compared with the case where the inorganic filler is not added.

(Embodiment 13)

The polymer electrolyte of this embodiment was manufactured as follows.

The dissolving process was carried out first as follows. 3 grams of the monomer shown by the equation (III) were completely dissolved in 12 grams of ethanol forming the solvent. Thus, a monomer solution was made up.

Then, the polymerizing process was carried out as follows. The monomer solution was impregnated in a polyethylene non-woven fabric ( having a thickness of 100 μm and a porosity of 65% ) forming a porous base material, and irradiated with electron beam. Thereby, the monomer in the monomer solution was polymerized to form an organic polymer.

The drying process and the impregnating process were carried out in the same way as the embodiment 2.

Thus, a polymer electrolyte A13 having a film thickness of 100 μm was prepared.

A surface and section of the dried organic polymer prepared by the drying process were observed by using the SEM, so that a microporous structure having an average pore diameter of about 1.0 μm was recognized. This implies that the organic polymer of polymer electrolyte A13 contained the microporous structure.

The reason why the organic polymer is provided with the microporous structure as mentioned above, may be caused by the same reason as the case of embodiment 3.

An ionic conductivity of the polymer electrolyte A13 at 20°C measured by means of the alternating current impedance method was $3.6 \times 10^{-3}$ S/cm. Thus, a high ionic conductivity was obtained.

The reason why the polymer electrolyte A13 presents such a high ionic conductivity as mentioned above, may be caused by the same reason as the case of polymer electrolyte A3.

Since the monomer shown by the equation (III) has two functional groups, the skeleton of organic polymer is provided with the crosslink structure. Therefore, the polymer electrolyte A13 is excellent in the durability against high-temperature and durability against repeated temperature changes, so that it can maintain the stable structure for a long period.

According to the above-mentioned manufacturing method, the polymer electrolyte A13 can be obtained without requiring a troublesome manufacturing method, in the same way as the embodiment 2.

In addition, since the monomer is polymerized in the polymerizing process under the condition where the monomer solution is impregnated in the polyethylene non-woven fabric forming the porous base material, it becomes easy to form and maintain the microporous structure as compared with the case where the porous base material is not used.

(Comparison embodiment 3)

This comparison embodiment is examined in relation to the embodiments 2 through 13.

The material and method same as those of the embodiment 2 were used except that the monomer shown by the equation (II) was used in place of the monomer shown by the equation (I). Thereby, a polymer electrolyte B3 having a film thickness of 100 μm was prepared.

The monomer shown by the equation (II) has a high affinity for the acetonitrile forming the solvent for use in the dissolving process.

A surface and section of the dried organic polymer prepared by the drying process were observed by using the SEM, so that the microporous structure was not recognized. However, the uniform structure was recognized. Namely, the organic polymer of the organic electrolyte B3 was not provided with the microporous structure.

The reason why the organic polymer contained the uniform structure as mentioned above, may be considered as follows. Since the monomer shown by the equation (II) has a high affinity for the solvent for use in the dissolving process, the monomer and the solvent do not give rise to phase separation at time of forming the organic polymer.

An ionic conductivity of the polymer electrolyte B3 at 20°C was measured by means of the alternating current impedance method, and it was $1.4 \times 10^{-3}$ S/cm. Namely, only a low ionic conductivity was obtained as compared with the polymer electrolyte A1.

The reason why the polymer electrolyte B3 presents such a low ionic conductivity as mentioned above, may be caused by the same reason as the case of polymer electrolyte B1.

Embodiments 14 through 30 relate to the polymer electrolyte, the polymer electrolyte battery and their manufacturing methods of this invention.

(Embodiment 14)

Fig. 1 is a sectional view of a lithium battery (lithium polymer secondary battery) forming the polymer electrolyte battery of this embodiment. This lithium battery is composed by sealing an electrode group 7 using a composite film 6. The electrode group 7 is composed by laminating a positive electrode 10 comprising a cathode composite 1 coated on a positive current collector 3 and a negative electrode 20 comprising an anode composite 2 coated on a negative current collector 4, through a separator 5.

The cathode composite 1 has a major component of lithium cobalt oxide forming a positive active material. The positive current collector 3 consists of an aluminum foil. The anode composite 2 has a major component of carbon forming a negative active material. The negative current collector 4 consists of a copper foil. The composite film 6 consists of the aluminum foil and an adhesive resin film.

The lithium battery having the above-mentioned structure was manufactured as follows.

The positive electrode 10 was prepared as follows. In the first stage, the lithium cobalt oxide forming the positive active material was mixed with acetylene black forming a conductive agent. In the next stage, this mixture was mixed with N-methyl-2-pyrrolidone solution of polyvinylidene fluoride forming a binder. Thereby, the cathode composite 1 was prepared. Then, the cathode composite 1 was coated on the positive current collector 3 and dried. The cathode composite 1 was pressed to a thickness of 0.1 mm, so that a positive electrode sheet was prepared. On the other hand, the monomer shown by the equation (I) was completely dissolved into an organic electrolyte prepared by dissolving 1 mol of $LiBF_4$ into 1 litter of γ-butyrolactone, so that a monomer solution was made up. By dipping the positive electrode sheet in the monomer solution, the cathode composite 1 was impregnated with the monomer solution. Thereafter, the positive electrode sheet was taken out of the monomer solution. By irradiating electron beam on the cathode composite 1, the monomer in the monomer solution was polymerized to form an organic polymer, so that the positive electrode 10 was prepared. Therefore, in this positive electrode 10, the cathode composite 1 contains the polymer electrolyte formed by holding the organic electrolyte in the organic polymer.

The negative electrode 20 was prepared using the material and method same as those of the positive electrode 10 except that the negative active material was used in place of the positive active material and the negative current collector 4 was used in place of the positive current collector 3. Therefore, in the negative electrode 20, the anode composite 2 contains the polymer electrolyte formed by holding the organic electrolyte in the organic polymer.

The separator 5 was prepared as follows. The monomer shown by the equation (I) was completely dissolved in a organic electrolyte formed by dissolving 1 mol of $LiBF_4$ into 1 litter of γ-butyrolactone, so that the monomer solution

was prepared. Then, this monomer solution was coated on the cathode composite 1 of the positive electrode 10 previously prepared as mentioned above. The monomer in the monomer solution was polymerized by irradiating electron beam on the coated monomer solution, so as to form an organic polymer. Thus, the separator 5 was made up. Therefore, this separator 5 is composed of the polymer electrolyte formed by holding the organic electrolyte in the organic polymer.
Then, the anode composite 2 of the negative electrode 20 was made contact with the separator 5 formed on the positive electrode 10 to compose the electrode group 7. The electrode group 7 was covered by the composite film 6, and all sides of the composite film 6 were sealed by thermal sealing so that a lithium battery having a capacity of 10 mAh was made up. This invention battery is named as an invention battery C1.
Therefore, in the invention battery C1, the polymer electrolyte is contained in the cathode composite 1, the anode composite 2 and the separator 5.
It was confirmed that any one of the organic polymer of the polymer electrolyte was provided with the microporous structure. The reason why the organic polymer was provided with the microporous structure, may be considered as follows. Since the monomer shown by the equation (I) is provided with a structure having a low affinity for the solvent of organic electrolyte, the monomer and the solvent give rise to phase separation microscopically at time of forming the organic polymer.
Since the monomer shown by the equation (I) contains two functional groups, the skeleton of organic polymer is provided with the crosslink structure. Therefore, the polymer electrolyte is excellent in durability against high-temperature and durability against repeated temperature changes, so that it can maintain the stabile structure for a long period. Consequently, the battery performance of the invention battery C1 becomes stable.
The manufacturing method of the lithium battery provided with the foregoing structure only includes the containing process for containing the polymer electrolyte in the cathode composite 1, the anode composite 2 and the separator 5 respectively; the laminating process for forming the electrode group 7; and the assembling process for sealing the electrode group 7 by using the composite film 6. However, this method does not include a troublesome process such as the solvent extracting process. Consequently, according to the above-mentioned manufacturing method, the invention battery C1 can be obtained without requiring a troublesome manufacturing process.

(Embodiment 15)

A fundamental structure of a lithium battery of this embodiment is as illustrated in Fig. 1.
The lithium battery of this embodiment was manufactured as follows.
A positive electrode 10 and a negative electrode 20 were same as those of the embodiment 14, and they were made up by using the same material and method as the embodiment 14.
The separator 5 was prepared by using the same material and method as those of the separator 5 of the embodiment 14, except that the monomer shown by the equation (II) was used in place of the monomer shown by the equation (I).
The battery was assembled in the same way as the embodiment 14. Thus, a lithium battery having a capacity of 10 mAh was obtained. This is named as an invention battery C2.
For this reason, in the invention battery C2, the polymer electrolyte is contained in the cathode composite 1, the anode composite 2 and the separator 5.
It was confirmed that the organic polymer of the polymer electrolyte of the separator 5 was not provided with the microporous structure, but provided with the uniform structure. The reason why the organic polymer of the separator 5 is provided with the uniform structure as mentioned above, may be considered as follows. Since almost all of the monomer shown by the equation (II) is composed of the structure having a high affinity for the solvent of organic electrolyte, the phase separation does not occur between the monomer and the solvent at time of forming the organic polymer.
In this instance, the organic polymer of the polymer electrolyte contained in the cathode composite 1 and anode composite 2, was provided with the microporous structure.

(Embodiment 16)

A fundamental structure of the lithium battery of this embodiment is as illustrated in Fig. 1.
The lithium battery of this embodiment was manufactured as follows.
A positive electrode 10 and a negative electrode 20 were same as those of the embodiment 14, and they were made up by using the same material and method as the embodiment 14.
The separator 5 was prepared as follows. The monomer shown by the equation (I) was dissolved in acetonitrile to make up a monomer solution. Then, the monomer solution was coated on the cathode composite 1 of the positive electrode 10 prepared by using the same material and method as those of the embodiment 14. By irradiating electron beam on the coated monomer solution, the monomer in the monomer solution was polymerized to form an organic

polymer. Thereafter, the acetonitrile contained in the organic polymer was removed by drying, so that a dried organic polymer was prepared. The dried organic polymer was dipped in an organic electrolyte solution prepared by dissolving 1 mol of $LiBF_4$ into 1 litter of γ-butyrolactone, so that the organic electrolyte was sufficiently impregnated in the organic polymer. Thus, a separator 5 was prepared.

The battery was assembled in the same way as the embodiment 14. Thus, a lithium battery having a capacity of 10 mAh was obtained. This is named as an invention battery C3.

For this reason, in the invention battery C3, the polymer electrolyte is contained in the cathode composite 1, the anode composite 2 and the separator 5.

In this instance, it was confirmed that any organic polymer of the polymer electrolyte was provided with the microporous structure.

(Embodiment 17)

A fundamental structure of the lithium battery of this embodiment is as illustrated in Fig. 1.

The lithium battery of this embodiment was manufactured as follows.

A positive electrode sheet was prepared by using same material and method as those of the embodiment 14. This was named as a positive electrode 10.

A monomer solution prepared by dissolving the monomer shown by the equation (I) in acetonitrile was coated on the cathode composite 1 of the positive electrode 10. By irradiating electron beam on the coated monomer solution, the monomer in the monomer solution was polymerized to form an organic polymer. Thereafter, the acetonitrile contained in the organic polymer was dried and removed.

While, a negative electrode sheet was prepared by using same material and method as those of the embodiment 14. This was named as a negative electrode 20.

Then, the anode composite 2 of the negative electrode 20 was made contact with the separator 5 formed on the cathode composite 1 of the positive electrode 10, so as to compose the electrode group 7. The electrode group 7 was impregnated with an organic electrolyte prepared by dissolving 1 mol of $LiBF_4$ into 1 litter of γ-butyrolactone. After that, the electrode group 7 was covered by the composite film 6, and all sides of the composite film 6 were sealed by thermal sealing so that a lithium battery having a capacity of 10 mAh was made up. This invention battery is named as an invention battery C4.

Therefore, in the invention battery C4, only the separator 5 contains the polymer electrolyte.

In this instance, it was confirmed that the organic polymer of the polymer electrolyte of the separator 5 was provided with the microporous structure.

The manufacturing method of the lithium battery provided with the foregoing structure includes the containing process for containing the polymer electrolyte in the separator 5; the laminating process for forming the electrode group 7 by means of the positive electrode 10, the negative electrode 20 and the separator 5; the impregnating process for impregnating the organic electrolyte into the electrode group 7; and the assembling process for sealing the electrode group 7 by the composite film 6. However, this method does not include a troublesome process such as the solvent extracting process. Consequently, according to the above-mentioned manufacturing method, the invention battery C4 can be obtained without requiring a troublesome manufacturing process.

(Comparison embodiment 4)

This comparison embodiment is examined in relation to the embodiments 14 through 17.

The material and method same as those of the embodiment 17 were used except that the monomer shown by the equation (II) was used in place of the monomer shown by the equation (I) which was the material for the separator 5. Thereby, a lithium battery having a capacity of 10 mAh was prepared. This is named as a comparison battery D1.

Consequently, in the comparison battery D1, only the separator 5 contains the polymer electrolyte.

It was confirmed that the organic polymer of the polymer electrolyte of the separator 5 was provided with the uniform structure.

(Comparison embodiment 5)

This comparison embodiment is examined in relation to the embodiments 14 through 17.

The material and method same as those of the embodiment 14 were used except that the monomer shown by the equation (II) was used in place of the monomer shown by the equation (I) which was the material for the positive electrode 10, the negative electrode 20 and the separator 5. Thereby, a lithium battery having a capacity of 10 mAh was prepared. This is named as a comparison battery D2.

Consequently, in the comparison battery D2, the cathode composite 1, the anode composite 2 and the separator 5 contain the polymer electrolyte.

It was confirmed that any organic polymer of the polymer electrolyte was provided with the uniform structure.

(Test)

Discharge-rate characteristics were examined on the invention batteries C1 through C4 and the comparison batteries D1 & D2. Test conditions were as follows. Temperature was set to 20°C. Charging was done under constant-current charging with a current of 1 mA and a final voltage of 4.2 V. Discharging was done under constant-current discharging with various current values and a final voltage of 2.7 V. Discharge capacity was shown by a ratio (%) to a nominal capacity. Results are shown in Fig. 2.

As seen from Fig. 2, in the comparison battery D2, only 60% of Discharge capacity were achieved even at a discharge current of 1 mA, and only 30% or less of discharge capacity were achieved at a discharge current of 5 mA. While, in the comparison battery D1, approximately 100% of discharge capacity were achieved at a discharge current of 1 mA, and about 70% of discharge capacity were achieved even at a discharge current of 10 mA.

On the contrary, in the invention batteries C1 & C2, approximately 100% of discharge capacity were achieved at a discharge current of 1 mA, and about 70% to 80% of discharge capacity were achieved even at a discharge current of 10 mA. In the invention batteries C3 & C4, approximately 100% of discharge capacity were achieved at a discharge current of 1 mA, and about 85% to 90% of discharge capacity were achieved even at a discharge current of 10 mA.

Consequently, the invention batteries C1 through C4 were excellent in the discharge-rate characteristics. The reason can be considered as follows. The organic polymers are provided with the microporous structures in the polymer electrolytes contained in the positive electrode 10, the negative electrode 20 and the separator 5 for the invention batteries C1 & C3; in the polymer electrolytes contained in the positive electrode 10 and the negative electrode 20 for the invention battery C2; and in the polymer electrolyte contained in the separator 5 for the invention battery C4. When the organic polymer contains the microporous structure, the organic electrolyte is held by swelling in the skeleton of organic polymer and also held in micropores as the free liquid-state electrolyte. Incidentally, the movement of lithium ion is commanded by lithium ion in the free liquid-state electrolyte. Consequently, in these polymer electrolytes, the movement of lithium ion is commanded by the organic electrolyte held in the micropores, so that a high ionic conductivity can be obtained.

(Embodiment 18)

A fundamental structure of a lithium battery of this embodiment is as illustrated in Fig. 1.

The lithium battery of this embodiment was manufactured as follows.

The positive electrode 10 was prepared as follows. In the first stage, the lithium cobalt oxide forming the positive active material was mixed with acetylene black forming a conductive agent. In the next stage, this mixture was mixed with N-methyl-2-pyrrolidone solution of polyvinylidene fluoride forming a binder. Thereby, the cathode composite 1 was prepared. Then, the cathode composite 1 was coated on the positive current collector 3 and dried. The cathode composite 1 was pressed to a thickness of 0.1 mm, so that a positive electrode sheet was prepared. By dipping the positive electrode sheet in an organic electrolyte which was prepared by dissolving 1 mol of $LiBF_4$ into 1 litter of γ-butyrolactone, the cathode composite 1 was impregnated with the organic electrolyte. Thereafter, the positive electrode sheet was taken out of the organic electrolyte. Thus, the positive electrode 10 was prepared. Therefore, this positive electrode 10 does not contain the polymer electrolyte.

The negative electrode 20 was prepared using the same material and method as those of the positive electrode 10 except that the negative active material was used in place of the positive active material and the negative current collector 4 was used in place of the positive current collector 3. Therefore, the negative electrode 20 does not contain the polymer electrolyte, too.

The separator 5 was prepared as follows. 3 grams of monomer shown by the equation (III) were completely dissolved in 12 grams of ethanol, so that a monomer solution was prepared. Then, this monomer solution was cast on a polyethylene terephthalate film. The monomer in the monomer solution was polymerized by irradiating electron beam on the cast monomer solution, so as to form an organic polymer. Thereafter, the polyethylene terephthalate film was removed. Then, the ethanol contained in the organic polymer was removed by drying, so that a dried organic polymer having a film thickness of 100 μm was prepared. By dipping the dried organic polymer in the organic electrolyte which was prepared by dissolving 1 mol of $LiBF_4$ into 1 litter of γ-butyrolactone, the organic polymer was sufficiently impregnated with the organic electrolyte. Thereby, the separator 5 was prepared.

The positive electrode 10, the separator 5 and the negative electrode 20 were laminated to compose the electrode group 7. The electrode group 7 was covered by the composite film 6, and all sides of the composite film 6 were sealed by thermal sealing so that a lithium battery having a capacity of 10 mAh was made up. This is named as an invention battery C5.

Therefore, in the invention battery C5, the polymer electrolyte is contained in the separator 5.

A surface and section of the dried organic polymer in a course of manufacture of the separator 5 were examined by SEM, and it was confirmed that a microporous structure having average pore diameter of about 0.5 μm was formed. In other words, the organic polymer of the polymer electrolyte of the separator 5 was provided with the microporous structure. The reason why the organic polymer was provided with the microporous structure, may be considered as follows. Since the monomer shown by the equation (III) has a low affinity for the ethanol, the monomer and the ethanol give rise to phase separation microscopically at time of forming the organic polymer.

An ionic conductivity of the polymer electrolyte of the separator 5 at 20°C was measured by means of the alternating current impedance method, and it was $3.8 \times 10^{-3}$ S/cm. Namely, a high ionic conductivity was obtained. The reason why the polymer electrolyte of the separator 5 presents a high ionic conductivity may be considered as follows.

Since the monomer shown by the equation (III) contains two functional groups, the skeleton of organic polymer is provided with the crosslink structure. Therefore, the polymer electrolyte of the separator 5 is excellent in durability against high-temperature and durability against repeated temperature changes, so that it can maintain its stable structure for a long period. Consequently, the battery performance of the invention battery C5 becomes stable.

(Embodiment 19)

A fundamental structure of the lithium battery of this embodiment is as illustrated in Fig. 1.

The lithium battery of this embodiment was manufactured as follows.

A positive electrode sheet and a negative electrode sheet were prepared by using same material and method as those of the embodiment 18. They were named as a positive electrode 10 and a negative electrode 20.

The separator 5 was prepared as follows. 3 grams of monomer shown by the equation (III) were completely dissolved in 12 grams of ethanol, so that a monomer solution was prepared. Then, this monomer solution was cast on a stainless foil. The monomer in the monomer solution was polymerized by irradiating electron beam on the cast monomer solution, so as to form an organic polymer. Thereafter, the stainless foil was removed. Then, the ethanol contained in the organic polymer was removed by drying, so that a dried organic polymer having a film thickness of 100 μm was prepared. This was used as a separator 5.

The positive electrode 10, the separator 5 and the negative electrode 20 were laminated to compose the electrode group 7. The electrode group 7 was impregnated with an organic electrolyte prepared by dissolving 1 mol of $LiBF_4$ into 1 litter of γ-butyrolactone. After that, the electrode group 7 was covered by the composite film 6, and all sides of the composite film 6 were sealed by thermal sealing so that a lithium battery having a capacity of 10 mAh was made up. This is named as an invention battery C6.

(Embodiment 20)

A fundamental structure of the lithium battery of this embodiment is as illustrated in Fig. 1.

The lithium battery of this embodiment was manufactured as follows.

A positive electrode sheet and a negative electrode sheet were prepared by using same material and method as those of the embodiment 18.

3 grams of monomer shown by the equation (III) were completely dissolved in 12 grams of ethanol, so that a monomer solution was prepared. Then, the cathode composite 1 was impregnated with the monomer solution by dipping the positive electrode sheet in the monomer solution. After that, the positive electrode sheet was taken out of the monomer solution. The monomer in the monomer solution was polymerized by irradiating electron beam on the cathode composite 1, so that the organic polymer was formed. Thereafter, the ethanol contained in the organic polymer was removed by drying. In this way, the positive electrode 10 was prepared.

The negative electrode sheet was treated in the same manner as the positive electrode sheet. Thus, the negative electrode 20 was prepared.

The separator 5 was prepared by using the same material and method as those of the embodiment 19.

The positive electrode 10, the separator 5 and the negative electrode 20 were laminated to compose the electrode group 7. The electrode group 7 was impregnated with an organic electrolyte prepared by dissolving 1 mol of $LiBF_4$ into 1 litter of γ-butyrolactone. After that, the electrode group 7 was covered by the composite film 6, and all sides of the composite film 6 were sealed by thermal sealing so that a lithium battery having a capacity of 10 mAh was made up. This is named as an invention battery C7.

(Embodiment 21)

A fundamental structure of a lithium battery of this embodiment is as illustrated in Fig. 1.

The lithium battery of this embodiment was manufactured as follows.

A positive electrode sheet and a negative electrode sheet were prepared by using the same material and method as those of the embodiment 18.

3 grams of monomer shown by the equation (III) were completely dissolved in 12 grams of organic electrolyte prepared by dissolving 1 mol of $LiBF_4$ into 1 litter of γ-butyrolactone, so that a monomer solution was prepared. Then, the cathode composite 1 was impregnated with the monomer solution by dipping the positive electrode sheet in the monomer solution. Thereafter, the positive electrode sheet was taken out of the monomer solution. The monomer in the monomer solution was polymerized by irradiating electron beam on the cathode composite 1, so that the organic polymer was formed. In this way, the positive electrode 10 was prepared.

The negative electrode sheet was treated in the same manner as the positive electrode sheet. Thus, the negative electrode 20 was prepared.

The separator 5 was prepared as follows. 3 grams of monomer shown by the equation (III) were completely dissolved in 12 grams of ethanol, so that a monomer solution was prepared. Then, this monomer solution was impregnated in a polyethylene non-woven fabric having a thickness of 30 μm. The monomer in the monomer solution was polymerized by irradiating electron beam on the impregnated monomer solution, so as to form an organic polymer. Then, the ethanol contained in the organic polymer was removed by drying, so as to prepare a dried organic polymer having a film thickness of 35 μm. By dipping the dried organic polymer in the organic electrolyte which was prepared by dissolving 1 mol of $LiBF_4$ into 1 litter of γ-butyrolactone, the organic polymer was sufficiently impregnated with the organic electrolyte. Thereby, the separator 5 was prepared.

The positive electrode 10, the separator 5 and the negative electrode 20 were laminated to compose the electrode group 7. The electrode group 7 was covered by the composite film 6, and all sides of the composite film 6 were sealed by thermal sealing so that a lithium battery having a capacity of 10 mAh was made up. This is named as an invention battery C8.

(Comparison embodiment 6)

This comparison embodiment is examined in relation to the embodiments 18 through 21.

The positive electrode 10 and the negative electrode 20 were prepared using the same material and method as those of the embodiment 21.

The separator 5 was prepared as follows. 3 grams of monomer shown by the equation (III) were completely dissolved in 12 grams of the organic electrolyte prepared by dissolving 1 mol of $LiBF_4$ into 1 litter of γ - butyrolactone, so that a monomer solution was prepared. Then, this monomer solution was cast on a polyethylene terephthalate film. The monomer in the monomer solution was polymerized by irradiating electron beam on the cast monomer solution, so as to form an organic polymer. After that, the polyethylene terephthalate film was removed. Thereby, a separator 5 was prepared.

The positive electrode 10, the separator 5 and the negative electrode 20 were laminated to compose the electrode group 7. The electrode group 7 was covered by the composite film 6, and all sides of the composite film 6 were sealed by thermal sealing so that a lithium battery having a capacity of 10 mAh was made up. This is named as a comparison battery D3.

The dried organic polymer was prepared by drying the separator 5 and removing the organic electrolyte. A surface and section of the dried organic polymer were examined by SEM, and it was confirmed that a microporous structure was not recognized but the uniform structure was recognized. In other words, the organic polymer of the polymer electrolyte of the separator 5 was not provided with the microporous structure. The reason why the organic polymer was provided with the uniform structure, may be considered as follows. Since the monomer shown by the equation (III) has a comparatively high affinity for the solvent of organic electrolyte, the microscopic phase separation does not occur between the monomer and the solvent at time of forming the organic polymer.

An ionic conductivity of the polymer electrolyte of the separator 5 at 20°C was measured by means of the alternating current impedance method, and it was $1.5 \times 10^{-3}$ S/cm. Namely, only a low ionic conductivity was obtained in the polymer electrolyte of the separator 5. The reason why the polymer electrolyte of the separator 5 has such a low ionic conductivity may be considered to be caused from the same reason as that of the polymer electrolyte B1.

(Test)

Discharge-rate characteristics were examined on the invention batteries C5 through C8 and the comparison battery D3. Test conditions were as follows. Temperature was set to 20°C. Charging was done under constant-current charging with a current of 1 mA and a final voltage of 4.2 V. Discharging was done under constant-current discharging with various current values and a final voltage of 2.7 V. Discharge capacity was shown by a ratio (%) to a nominal capacity. Results are shown in Fig. 3.

As seen from Fig. 3, at a discharge current of 10 mA, only 30% or less of discharge capacity was achieved in the comparison battery D3, but 80% to 95% of discharge capacities were achieved in the invention batteries C5 through C8.

Further, charge/discharge cycle tests were carried out on the invention batteries C5 through C8 and the comparison battery D3. Test conditions were as follows. Temperature was set to 20°C. Charging was done under constant-current charging with a current of 1 mA and a final voltage of 4.2 V. Discharging was done under constant-current discharging with a current of 1 mA and a final voltage of 2.7 V. Discharge capacity was shown by a ratio (%) to a nominal capacity. Results are shown in Fig. 4.

As seen from Fig. 4, in the comparison battery D3, approximately 100% of discharge capacity was obtained at initial stages of charging and discharging. However, the capacity gradually decreased with an elapse of cycle, and fell below 80% at $150^{th}$ cycle. On the contrary, in the invention batteries C5 through C8, not only approximately 100% of discharge capacity were achieved from the initial stages of charging and discharging, but 80% or more of discharge capacity were achieved even after an elapse of $300^{th}$ cycle.

The reason why the discharge-rate characteristics and charge/discharge cycle characteristics of the invention batteries C5 through C8 are superior to those of the comparison battery D3, may be considered as follows. In the comparison battery D3, since the organic polymers of the polymer electrolytes contained in the cathode composite 1, the anode composite 2 and the separator 5 are provided with the uniform structure but not provided with the microporous structure, the movement of lithium ion is difficult in the polymer electrolyte. For this reason, it becomes difficult to keep the battery performance at a sufficient level at time of the high-rate discharging and after an elapse of cycle.

On the contrary, in the invention batteries C5 through C8, at least the organic polymer of the polymer electrolyte contained in the separator 5 is provided with the microporous structure. Therefore, in the polymer electrolyte, the organic electrolyte restricted by swelling in the skeleton of organic polymer is microscopically mixed with the free liquid-state electrolyte held in the micropore. For this reason, in the polymer electrolyte, the movement of lithium ion can be done smoothly in the free liquid-state electrolyte. Consequently, in the invention batteries C5 through C8, not only a good discharge characteristic can be achieved at high-rate discharging, but a stable battery performance can be achieved even after an elapse of cycle.

(Embodiment 22)

A fundamental structure of the lithium battery of this embodiment is as illustrated in Fig. 1.

The lithium battery of this embodiment was manufactured as follows.

The positive electrode 10 was prepared as follows. In the first stage, the lithium cobalt oxide forming a positive active material was mixed with acetylene black forming a conductive agent. In the next stage, this mixture was mixed with N-methyl-2-pyrrolidone solution of polyvinylidene fluoride forming a binder. Thereby, the cathode composite 1 was prepared. Then, the cathode composite 1 was coated on the positive current collector 3 and dried. The cathode composite 1 was pressed to be brought into a thickness of 0.1 mm, so that a positive electrode sheet was prepared. This was used for the positive electrode 10. Therefore, this positive electrode 10 does not contain the polymer electrolyte.

The negative electrode 20 was prepared as follows. A negative electrode sheet was prepared by using the same material and method as those of the positive electrode 10 except that the negative active material was used in place of the positive active material and the negative current collector 4 was used in place of the positive current collector 3. This was used for the negative electrode 20. Therefore, the negative electrode 20 does not contain the polymer electrolyte, too.

The separator 5 was prepared as follows. 3 grams of the monomer shown by the equation (III) were completely dissolved in 12 grams of ethanol, so that a monomer solution was prepared. Then, this monomer solution was cast on a polyethylene terephthalate film. The monomer in the monomer solution was polymerized by irradiating electron beam on the cast monomer solution, so as to form an organic polymer. Thereafter, the polyethylene terephthalate film was removed. Then, the ethanol contained in the organic polymer was removed by drying, so that a dried organic polymer having a film thickness of 100 μm was prepared. This was used for the separator 5.

The positive electrode 10, the separator 5 and the negative electrode 20 were laminated to compose the electrode group 7. The electrode group 7 was impregnated with an organic electrolyte, which was formed by dissolving 1 mol of $LiBF_4$ into 1 litter of solvent prepared by mixing γ-butyrolactone with ethylene carbonate at a volume ratio of 3:2. The electrode group 7 was covered by the composite film 6, and all sides of the composite film 6 were sealed by thermal sealing so that a lithium battery having a capacity of 10 mAh was made up. This is named as an invention battery C9.

A surface and section of the dried organic polymer in a course of manufacture of the separator 5 was examined by SEM, and it was confirmed that a microporous structure having average pore diameter of about 0.5 μm were formed in it. In other words, the organic polymer of the polymer electrolyte of the separator 5 was provided with the microporous structure. The reason why the organic polymer was provided with the microporous structure, may be considered as

follows. Since the monomer shown by the equation (III) has a low affinity for the ethanol, the microscopic phase separation occurs between the monomer and the ethanol at time of forming the organic polymer.

A degree of swelling of the skeleton of dried organic polymer in a course of manufacture of the separator 5 was examined. This degree of swelling is defined by an equation 2.

$$\text{DEGREE OF SWELLING} = \frac{\text{WEIGHT OF ORGANIC POLYMER AFTER IMPREGNATION OF ORGANIC ELECTROLYTE}}{\text{WEIGHT OF ORGANIC POLYMER BEFORE IMPREGNATION OF ORGANIC ELECTROLYTE}} \quad \cdots\text{(EQUATION 2)}$$

The degree of swelling was examine as follows. Only the monomer shown by the equation (III) was cast on the polyethylene terephthalate film. By irradiating electron beam on the cast monomer, the monomer was polymerized to form an organic polymer. Thereafter, the polyethylene terephthalate film was removed. At this moment, a weight of the organic polymer was measured. Then, the organic polymer was dipped in the organic electrolyte, so that the organic electrolyte was sufficiently impregnated in the organic polymer. At this moment, a weight of the organic polymer was measured. Weights of the organic polymers before and after impregnation of the organic electrolyte were compared to calculate the degree of swelling. The degree of swelling was 1.26.

(Embodiments 23 through 27)

Fundamental structures of lithium batteries of these embodiments are as illustrated in Fig. 1.

In the manufacture of the separator 5, the same material and method as those of the embodiment 22 were used except that the monomers and solvents as listed in Table 3 were used. Thus, invention batteries C10 through C14 were obtained. The degree of swelling of skeleton, existence of micropore structure and average pore diameter of micropore are also listed in Table 3.

[TABLE 3]

| EMBODIMENT | BATTERY | MONOMER | SOLVENT | ORGANIC POLYMER | | |
|---|---|---|---|---|---|---|
| | | | | DEGREE OF SWELLING OF SKELETON | EXISTENCE OF MICROPOROUS STRUCTURE | AVERAGE PORE DIAMETER OF MICROPORE (ABOUT) |
| 23 | C10 | EQUATION (I) | METHANOL | 1.14 | EXIST | 0.3 μm |
| 24 | C11 | EQUATION (IV) | METHANOL | 1.47 | EXIST | 0.5 μm |
| 25 | C12 | EQUATION (IV) | ETHANOL | 1.47 | EXIST | 0.7 μm |
| 26 | C13 | EQUATION (VI) | ETHANOL | 1.62 | EXIST | 0.3 μm |
| 27 | C14 | EQUATION (V) | ETHANOL | 2.21 | EXIST | 0.3 μm |

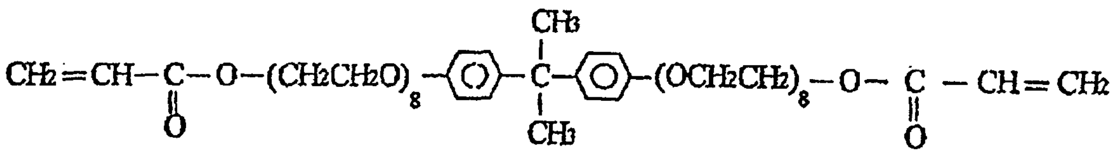

...... (VI)

(Comparison embodiment 7)

This comparison embodiment is examined in relation to the embodiments 22 through 27.

In the manufacture of the separator 5, the same material and method as those of the embodiment 22 were used except that the monomer shown by the equation (III) was used for the monomer and acetonitrile was used for the solvent. Thus, a comparison battery D4 was obtained.

The organic polymer was not provided with the microporous structure. The degree of swelling of the skeleton of organic polymer was 1.26.

(Comparison embodiment 8)

This comparison embodiment is examined in relation to the embodiments 22 through 27.

The separator 5 was prepared as follows. The monomer shown by the equation (III) was dissolved in an organic electrolyte, which was formed by dissolving 1 mol of $LiBF_4$ into 1 litter of solvent prepared by mixing γ-butyrolactone with ethylene carbonate at a volume ratio of 3:2, so that a monomer solution was prepared. Then, this monomer solution was cast on a polyethylene terephthalate film. The monomer in the monomer solution was polymerized by irradiating electron beam on the cast monomer solution, so as to form an organic polymer. Thereafter, the polyethylene terephthalate film was removed. Thereby, the separator 5 was prepared. Therefore, the polymer electrolyte is contained in the separator 5.

A comparison battery D5 was obtained by using the same material and method as those of the embodiment 22 except for the above-mentioned procedure.

A dried organic polymer was prepared by drying the separator 5 and removing the organic electrolyte. A surface and section of the dried organic polymer were examined by SEM, and it was confirmed that a microporous structure was not recognized but the uniform structure was recognized. In other words, the organic polymer of the polymer electrolyte of the separator 5 was not provided with the microporous structure. Therefore, it was found in this polymer electrolyte, that the entire organic electrolytes was held by swelling in the skeleton of organic polymer. The degree of swelling of the skeleton of organic polymer was 1.26.

(Test)

Discharge-rate characteristics were examined on the invention batteries C9 through C14 and the comparison batteries D4 & D5. Test conditions were as follows. Temperature was set to 20°C. Charging was done under constant-current charging with a current of 2 mA and a final voltage of 4.2 V. Discharging was done under constant-current discharging with various current values and a final voltage of 2.7 V. Discharge capacity was shown by a ratio (%) to a nominal capacity. Results are shown in Fig. 5.

As seen from Fig. 5, at a discharge current of 30 mA, only 30% or less of discharge capacities were achieved in the comparison batteries D4 & D5, but about 50% of discharge capacity was achieved in the invention battery C14 and 80% or more of discharge capacities were achieved in the invention batteries C9 through C13.

Further, charge/discharge cycle tests were carried out on the invention batteries C9 through C14 and the comparison batteries D4 & D5. Test conditions were as follows. Temperature was set to 20°C. Charging was done under constant-current charging with a current of 5 mA and a final voltage of 4.2 V. Discharging was done under constant-current discharging with a current of 5 mA and a final voltage of 2.7 V. Discharge capacity was shown by a ratio (%) to a nominal capacity. Results are shown in Fig. 6.

As seen from Fig. 6, in the comparison battery D5, approximately 100% of discharge capacity were achieved at initial stages of charging and discharging. However, the capacity gradually decreased with an elapse of cycle, and fell below 80% at $150^{th}$ cycle. In the comparison battery D4, approximately 100% of discharge capacity were achieved at initial stages of charging and discharging. However, the capacity gradually decreased with an elapse of cycle, and fell below 80% at $230^{th}$ cycle. On the contrary, in the invention battery C14, not only approximately 100% of discharge

capacity were achieved from the initial stages of charging and discharging, but 80% or more of discharge capacity were achieved even after an elapse of $250^{th}$ cycle. Further, in the invention batteries C9 through C13, not only approximately 100% of discharge capacity were achieved from the initial stage of charging and discharging, but 80% or more of discharge capacity were achieved even after an elapse of $300^{th}$ cycle.

The reason why the discharge-rate characteristics and charge/discharge cycle characteristics of the invention batteries C9 through C14 are superior to those of the comparison batteries D4 & D5, may be considered as follows. In the comparison batteries D4 & D5, since the organic polymer of the polymer electrolyte contained in the separator 5 is provided with the uniform structure but not provided with the microporous structure, the movement of lithium ion is difficult in the polymer electrolyte. For this reason, it becomes difficult to keep the battery performance at a sufficient level at time of the high-rate discharging and after an elapse of cycle.

On the contrary, in the invention batteries C9 through C14, the organic polymer of the polymer electrolyte contained in the separator 5 is provided with the microporous structure. Therefore, in the polymer electrolyte, the organic electrolyte restricted by swelling in the skeleton of organic polymer is microscopically mixed with the free liquid-state electrolyte held in the micropore. For this reason, in the polymer electrolyte, the movement of lithium ion can be done smoothly in the free liquid-state electrolyte. Therefore, in the invention batteries C9 through C14, not only a good discharge characteristic can be achieved at high-rate discharging, but a stable battery performance can be achieved after an elapse of cycle.

The discharge-rate characteristic and charge/discharge cycle characteristic of the invention batteries C14 are inferior to those of the invention batteries C9 through C13. The reason can be considered as follows. In the invention batteries C14, the organic polymer of the polymer electrolyte contained in the separator 5 is provided with the microporous structure, however, the degree of swelling of the skeleton of organic polymer is large, as shown in Table 3. Therefore, a rate of the movement of lithium ion burdened by the organic electrolyte held by swelling of the skeleton of organic polymer, becomes large. For this reason, the movement of lithium ion becomes difficult.

As understood by comparing the invention batteries C9 through C13 and the invention battery C14, it is desirable that not only the organic polymer of the polymer electrolyte is provided with the microporous structure but its degree of swelling of the skeleton is larger than 1 and smaller than or equal to 2. Particularly, a value larger than 1 and smaller than or equal to 1.5 is preferable.

(Embodiment 28)

A fundamental structure of the lithium battery of this embodiment is as illustrated in Fig. 1.

The lithium battery of this embodiment was manufactured as follows.

The positive electrode 10 was prepared as follows. In the first stage, the lithium cobalt oxide forming a positive active material was mixed with acetylene black forming a conductive agent. In the next stage, this mixture was mixed with N-methyl-2-pyrrolidone solution of polyvinylidene fluoride forming a binder. Thereby, a cathode composite 1 was prepared. Then, the cathode composite 1 was coated on the positive current collector 3 and dried. The cathode composite 1 was pressed to a thickness of 0.1 mm, so that a positive electrode sheet was prepared. The positive electrode sheet was dipped in an organic electrolyte, which was formed by dissolving 1 mol of $LiBF_4$ into 1 litter of solvent prepared by mixing $\gamma$-butyrolactone with ethylene carbonate at a volume ratio of 3:2. Thus, the organic electrolyte was impregnated to the cathode composite 1. Then, the positive electrode sheet was taken out of the organic electrolyte. Thereby, the positive electrode 10 was obtained. Therefore, the positive electrode 10 does not contain the polymer electrolyte.

The negative electrode 20 was prepared by using the same material and method as those of the positive electrode 10 except that the negative active material was used in place of the positive active material and the negative current collector 4 was used in place of the positive current collector 3. Therefore, the negative electrode 20 does not contain the polymer electrolyte, too.

The separator 5 was prepared as follows. 3 grams of the monomer shown by the equation (III) were completely dissolved in 12 grams of ethanol, so that a monomer solution was prepared. Then, this monomer solution was cast on a polyethylene terephthalate film. The monomer in the monomer solution was polymerized by irradiating electron beam on the cast monomer solution, so as to form an organic polymer. Thereafter, the polyethylene terephthalate film was removed. Then, the ethanol contained in the organic polymer was removed by drying, so that a dried organic polymer having a film thickness of 100 μm was prepared. The dried organic polymer was impregnated in an organic electrolyte formed by dissolving 1 mol of $LiBF_4$ into 1 litter of solvent prepared by mixing $\gamma$-butyrolactone with ethylene carbonate at a volume ratio of 3:2. Thus, the organic polymer was sufficiently impregnated with the organic electrolyte. Thereby, the separator 5 was obtained.

The positive electrode 10, the separator 5 and the negative electrode 20 were laminated to form the electrode group 7. The electrode group 7 was covered by the composite film 6, and all sides of the composite film 6 were sealed by thermal sealing so that a lithium battery having a capacity of 10 mAh was made up. This is named as an invention battery C15.

Therefore, in the invention battery C15, only the separator 5 contains the polymer electrolyte.

A surface and section of the dried organic polymer in a course of manufacture of the separator 5 were examined by SEM, and it was confirmed that a microporous structure having average pore diameter of about 0.5 μm was formed. In other words, the organic polymer of the polymer electrolyte of the separator 5 was provided with the microporous structure. The reason why the organic polymer was provided with the microporous structure, may be considered as follows. Since the monomer shown by the equation (III) has a low affinity for the ethanol, the microscopic phase separation occurs between the monomer and the ethanol at time of forming the organic polymer.

An ionic conductivity of the polymer electrolyte of the separator 5 at 20°C was measured by means of the alternating current impedance method, and it was $3.8 \times 10^{-3}$ S/cm. Namely, a high ionic conductivity was obtained. The reason why the polymer electrolyte of the separator 5 presents such a high ionic conductivity, may be considered as follows. Since the monomer shown by the equation (III) has a high affinity for the solvent of organic electrolyte, the organic electrolyte is held by swelling in the skeleton of organic polymer. On the other hand, since the organic polymer is provided with the microporous structure, the organic electrolyte is held in the micropores in a form of free liquid-state electrolyte. Accordingly, in the polymer electrolyte of the separator 5, the organic electrolyte comes to a microscopically mixed state existing in the skeleton of organic polymer and the micropores of organic polymer. In this instance, the movement of lithium ion is commanded by the lithium ion in the free liquid-state electrolyte. Consequently, a high ionic conductivity can be obtained in the polymer electrolyte the separator 5, because the movement of lithium ion is commanded by the organic electrolyte held in the micropores.

Since the monomer shown by the equation (III) has two functional groups, the skeleton of organic polymer is provided with the crosslink structure. Therefore, the polymer electrolyte of the separator 5 is excellent in durability against high-temperature and durability against repeated temperature changes, so that it can maintain the stable structure for a long period.

In the polymer electrolyte of the separator 5, a quantity of the organic electrolyte held by swelling in the skeleton of organic polymer and a quantity of the organic electrolyte held in the micropores of organic polymer were examined as for quantitative relationship. These values were examined by calculating a quantity of the organic electrolyte held by the organic polymer containing the microporous structure and a quantity of the organic electrolyte held by the organic polymer not containing the microporous structure.

(x) Quantity of organic electrolyte held in organic polymer containing microporous structure:

A weight of dried organic polymer in a course of manufacture of the separator 5 was measured first. The organic polymer was sufficiently impregnated with the foregoing organic electrolyte. Thus, a polymer electrolyte was prepared and its weight was measured. As the result, the latter was 1.85 times as large as the former.

(y) Quantity of organic electrolyte held in organic polymer not containing microporous structure:

Only the monomer shown by the equation (III) was first cast on the polyethylene terephthalate film. Then, the monomer was polymerized by irradiating electron beam on the cast monomer, so as to form an organic polymer. Thereafter, the polyethylene terephthalate film was removed. Here, a weight of the organic polymer was measured. By dipping the organic polymer in the foregoing organic electrolyte, the organic electrolyte was sufficiently impregnated in the organic polymer. Here, a weight of the organic polymer was measured. As the result, the latter was 1.26 times as large as the former.

(z) Result:

A quantity of organic electrolyte held in the micropore is shown by a difference between 1.85 times and 1.26 times. Therefore, it is 0.59 times as small as the weight of organic polymer. While, the quantity of organic electrolyte held by swelling in the skeleton of organic polymer is, as seen from the above (y), 0.26 times as small as the weight of organic polymer. Therefore, in the polymer electrolyte of the separator 5, the quantity of organic electrolyte held in the micropore is larger than the quantity of organic electrolyte held by swelling in the skeleton of organic polymer.

(Embodiment 29)

A fundamental structure of the lithium battery of this embodiment is as illustrated in Fig. 1.

The lithium battery of this embodiment was manufactured as follows.

The positive electrode sheet, the negative electrode sheet and the dried organic polymer were prepared by using the same material and method as those of the embodiment 28. They were used for a positive electrode 10, a negative electrode 20 and a separator 5.

The positive electrode 10, the separator 5 and the negative electrode 20 were laminated to compose the electrode group 7. The electrode group 7 was impregnated with an organic electrolyte, which was formed by dissolving 1 mol of $LiBF_4$ into 1 litter of solvent prepared by mixing γ-butyrolactone with ethylene carbonate at a volume ratio of 3:2. The electrode group 7 was covered by the composite film 6, and all sides of the composite film 6 were sealed by thermal sealing so that a lithium battery having a capacity of 10 mAh was made up. This is named as an invention battery C16.

The polymer electrolyte of the separator 5 is practically same with the polymer electrolyte of the separator 5 of the embodiment 28. Therefore, in the polymer electrolyte of the separator 5, a quantity of organic electrolyte held in the micropore is larger than a quantity of organic electrolyte held by swelling in the skeleton of organic polymer.

(Embodiment 30)

A fundamental structure of the lithium battery of this embodiment is as illustrated in Fig. 1.

The lithium battery of this embodiment was manufactured as follows.

The positive electrode sheet and the negative electrode sheet were prepared by using the same material and method as those of the embodiment 28. They were used for a positive electrode 10 and a negative electrode 20.

The separator 5 was prepared as follows. 3 grams of monomer shown by the equation (III) were completely dissolved in a solvent formed by mixing 6 grams of acetonitrile and 6 grams of ethanol, so that a monomer solution was prepared. Then, this monomer solution was cast on a polyethylene terephthalate film. The monomer in the monomer solution was polymerized by irradiating electron beam on the cast monomer solution, so as to form an organic polymer. Thereafter, the polyethylene terephthalate film was removed. Then, the acetonitrile and ethanol contained in the organic polymer were removed by drying, so that a dried organic polymer having a film thickness of 100 μm was prepared. The dried organic polymer was impregnated in the organic electrolyte formed by dissolving 1 mol of $LiBF_4$ into 1 litter of solvent prepared by mixing γ-butyrolactone with ethylene carbonate at a volume ratio of 3:2. Thus, the organic polymer was sufficiently impregnated with the organic electrolyte. Thereby, a separator 5 was obtained.

The positive electrode 10, the separator 5 and the negative electrode 20 were laminated to compose the electrode group 7. The electrode group 7 was covered by the composite film 6, and all sides of the composite film 6 were sealed by thermal sealing so that a lithium battery having a capacity of 10 mAh was made up. This is named as an invention battery C17.

A surface and section of the dried organic polymer in a course of manufacture of the separator 5 were examined by SEM, and it was confirmed that a microporous structure having an average pore diameter of about 0.1 μm was formed in it. In other words, the organic polymer of the polymer electrolyte of the separator 5 was provided with the microporous structure.

An ionic conductivity of the polymer electrolyte of the separator 5 at 20°C was measured by means of the alternating current impedance method, and it was $2.8 \times 10^{-3}$ S/cm. Thus, a high ionic conductivity was obtained.

In the polymer electrolyte of the separator 5, a quantity of the organic electrolyte held by swelling in the skeleton of organic polymer and a quantity of the organic electrolyte held in the micropores of organic polymer were examined as for their relationship. This examination was carried out in the same procedures as (x) through (z) of the embodiment 28. The result of (x) was 1.32. Therefore, in (z), the quantity of organic electrolyte held in the micropores is shown by a difference between 1.32 times and 1.26 times, that is; 0.06 times of the weight of organic polymer. On the other hand, the quantity of organic electrolyte held by swelling in the skeleton of organic polymer is 0.26 times as small as the weight of organic polymer, as seen from (y). Consequently, in the polymer electrolyte of the separator 5, the quantity of organic electrolyte held in the micropore is smaller than the quantity of organic electrolyte held by swelling in the skeleton of organic polymer.

(Comparison embodiment 9)

This comparison embodiment was examined in relation to the embodiments 28 through 30.

The positive electrode sheet and the negative electrode sheet were prepared by using the same material and method as those of the embodiment 28. They were used for a positive electrode 10 and a negative electrode 20.

The separator 5 was prepared as follows. 3 grams of monomer shown by the equation (III) were completely dissolved in 12 grams of organic electrolyte formed by dissolving 1 mol of $LiBF_4$ into 1 litter of solvent prepared by mixing γ-butyrolactone with ethylene carbonate at a volume ratio of 3:2, so that a monomer solution was prepared. Then, this monomer solution was cast on a polyethylene terephthalate film. The monomer in the monomer solution was polymerized by irradiating electron beam on the cast monomer solution, so as to form an organic polymer. Thereafter, the polyethylene terephthalate film was removed. Thereby, a separator 5 was obtained.

A lithium battery having a capacity of 10 mAh was obtained in the same way as the embodiment 28. This is named as a comparison battery D6.

The dried organic polymer was prepared by drying the separator 5 and removing the organic electrolyte. A surface and section of the dried organic polymer were examined by SEM, and it was confirmed that a microporous structure was not recognized but the uniform structure was recognized. In other words, the organic polymer of the polymer electrolyte of the separator 5 was not provided with the microporous structure.

An ionic conductivity of the polymer electrolyte of the separator 5 at 20°C was measured by means of the alternating current impedance method, and it was $1.5 \times 10^{-3}$ S/cm. Namely, only a low ionic conductivity was obtained in the polymer electrolyte of the separator 5.

(Test)

Discharge-rate characteristics were examined on the invention batteries C15 through C17 and the comparison battery D6. Test conditions were as follows. Temperature was set to 20°C. Charging was done under constant-current charging with a current of 2 mA and a final voltage of 4.2 V. Discharging was done under constant-current discharging with various current values and a final voltage of 2.7 V. Discharge capacity was shown by a ratio (%) to a nominal capacity. Results are shown in Fig. 7.

As seen from Fig. 7, at a discharge current of 30 mA, only 30% or less of discharge capacity was achieved in the comparison battery D6. However, about 60% of discharge capacities was achieved in the invention battery C17, 80% thereof in the invention battery C15, and 85% thereof in invention battery C16.

Further, charge/discharge cycle tests were carried out on the invention batteries C15 through C17 and the comparison battery D6. Test conditions were as follows. Temperature was set to 20°C. Charging was done under constant-current charging with a current of 5 mA and a final voltage of 4.2 V. Discharging was done under constant-current discharging with a current of 5 mA and a final voltage of 2.7 V. Discharge capacity was shown by a ratio (%) to a nominal capacity. Results are shown in Fig. 8.

As seen from Fig. 8, in the comparison battery D6, approximately 100% of discharge capacity was obtained at initial stages of charging and discharging. However, the capacity gradually decreased with an elapse of cycle, and fell below 80% at 150$^{th}$ cycle. On the contrary, in the invention batteries C17, not only approximately 100% of discharge capacity were achieved from the initial stages of charging and discharging, but 80% or larger of discharge capacity was achieved even after an elapse of 250$^{th}$ cycle. In the invention batteries C15 & C16, not only approximately 100% of discharge capacity were achieved from the initial stages of charging and discharging, but 80% or larger of discharge capacity were achieved even after an elapse of 300$^{th}$ cycle.

The reason why the discharge-rate characteristics and charge/discharge cycle characteristics of the invention batteries C15 through C17 are superior to those of the comparison battery D6, may be considered as follows. In the comparison battery D6, since the organic polymer of polymer electrolyte contained in the separator 5 is provided with the uniform structure but not provided with the microporous structure, the movement of lithium ion is difficult in the polymer electrolyte. For this reason, it becomes difficult to keep the battery performance at a sufficient level at time of the high-rate discharging and after an elapse of cycle.

On the contrary, in the invention batteries C15 through C17, the organic polymer of polymer electrolyte contained in the separator 5 is provided with the microporous structure. Therefore, in the polymer electrolyte, the organic electrolyte restricted by swelling in the skeleton of organic polymer is microscopically mixed with the free liquid-state electrolyte held in the micropore. For this reason, in the polymer electrolyte, the movement of lithium ion can be done smoothly in the free liquid-state electrolyte. Therefore, in the invention batteries C15 through C17, not only a good discharge characteristic can be achieved at high-rate discharging, but a stable battery performance can be achieved even after an elapse of cycle.

The discharge-rate characteristic and charge/discharge cycle characteristic of the invention battery C17 are a little inferior to those of the invention batteries C15 & C16. The reason may be considered as follows. In the invention battery C17, since the monomer shown by the equation (III) has a high affinity for acetonitrile, a microporous structure having a sufficient large pore diameter can not be obtained and a part of the organic polymer becomes the uniform structure. For this reason, the quantity of organic electrolyte held in the micropore of organic polymer becomes smaller than the quantity of organic electrolyte held by swelling in the skeleton of organic polymer. Therefore, a rate of the movement of lithium ion burdened by the organic electrolyte held by swelling of the skeleton of organic polymer, becomes large. Consequently, the movement of lithium ion becomes difficult.

As understood by comparing the invention batteries C15 & C16 with the invention battery C17, it is desirable that not only the organic polymer of the polymer electrolyte is provided with the microporous structure, but the quantity of organic electrolyte held in the micropore of organic polymer is larger than the quantity of organic electrolyte held by swelling in the skeleton of organic polymer.

(Another embodiment)

The lithium battery was mentioned as an example of the polymer electrolyte battery. However, this invention may be applied to various batteries using protic electrolyte such as a nickel-metal hydride battery etc.

## Claims

1. In a polymer electrolyte having a structure in which an organic electrolyte is held in an organic polymer, the polymer electrolyte is provided with following structures (i) through (iii).

   (i) A skeleton of the organic polymer has a crosslink structure.
   (ii) The organic polymer has a microporous structure.
   (iii) The organic electrolyte is held by swelling in the skeleton of organic polymer, and also held in micropores.

2. A polymer electrolyte as set forth in claim 1, in which a degree of swelling of the skeleton of organic polymer relative to the organic electrolyte lies within a range shown by an equation 1.

$$1 < \text{DEGREE OF SWELLING} = \frac{\text{WEIGHT OF ORGANIC POLYMER AFTER IMPREGNATION OF ORGANIC ELECTROLYTE}}{\text{WEIGHT OF ORGANIC POLYMER BEFORE IMPREGNATION OF ORGANIC ELECTROLYTE}} \leqq 2$$

···(EQUATION 1)

3. A polymer electrolyte as set forth in claim 1, in which a quantity of the organic electrolyte held in the micropores of organic polymer is larger than a quantity of the organic electrolyte held by swelling in the skeleton of organic polymer.

4. In a manufacturing method for a polymer electrolyte having a structure in which an organic electrolyte is held in an organic polymer, the manufacturing method includes;
   a dissolving process for making up a monomer solution by dissolving a monomer having a polymerizing functional group in its molecule into an organic electrolyte, and
   a polymerizing process in which an organic polymer is formed by crosslinking the monomer in monomer solution through polymerization and at the same time the organic electrolyte is impregnated into the organic polymer; and the method uses as the monomer
   a monomer having following properties (a) and (b) in one molecule, or a mixture of a monomer having the property (a) and a monomer having the property (b).

   (a) having an affinity for the solvent of organic electrolyte.
   (b) decreasing a solubility for the organic solvent of organic electrolyte at time of polymerization.

5. In a manufacturing method for a polymer electrolyte having a structure in which an organic electrolyte is held by an organic polymer, the manufacturing method includes;
   a dissolving process for making up a monomer solution by dissolving a monomer having a polymerizing functional group in its molecule into a solvent,
   a polymerizing process in which an organic polymer is formed by crosslinking the monomer in monomer solution through polymerization,
   a drying process for removing the above solvent contained in the organic polymer, and
   an impregnating process for impregnating the organic electrolyte into the organic polymer, and the method uses as the monomer

a monomer having following properties (a) and (b) in one molecule, or a mixture of a monomer having the property (a) and a monomer having the property (b).

(a) having an affinity for the solvent of organic electrolyte.
(b) decreasing a solubility for the solvent for use in the dissolving process at time of polymerization.

**6.** A manufacturing method for the polymer electrolyte as set forth in claim 4 or 5, in which monomers optionally selected from compounds shown in equation (A) are used for the monomer.

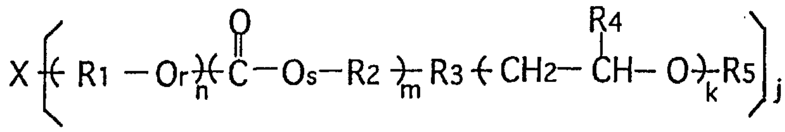 ··· (A)

**X: j-valent connecting group**
$R_1$ : $-C_pH_{2p}-$ p=0～10
$R_2$ : $-C_qH_{2q}-$ q=0～10
$R_3$ : $-C_tH_{2t}-$ t=0～10
$R_4$ : $C_vH_{2v+1}$ v=0～5

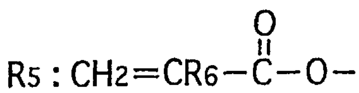

$R_6$ : $C_wH_{2w+1}$ w=0～5
r,s: s=1 when r=0, s=0 when r=1 j = 1～6 m=0～3 k=1～500 n=0～20

**7.** A manufacturing method for the polymer electrolyte as set forth in claim 4 or 5, in which an inorganic filler is mixed in the dissolving process.

**8.** A manufacturing method for the polymer electrolyte as set forth in claim 4 or 5, in which a base material utilizing process wherein the monomer solution is impregnated in or coated or cast on the porous base material, is provided in advance of the polymerizing process.

**9.** In a polymer electrolyte battery containing as its composition material a polymer electrolyte having a structure in which an organic electrolyte is held in an organic polymer,

the polymer electrolyte contained in at least one of a positive electrode, a negative electrode and a separator, is provided with following structures (i) through (iii).

(i) A skeleton of the organic polymer has a crosslink structure.
(ii) The organic polymer has a microporous structure.
(iii) The organic electrolyte is held by swelling in the skeleton of organic polymer and also held in micropores.

**10.** A polymer electrolyte battery as set forth in claim 9, in which a degree of swelling of the skeleton of organic polymer relative to the organic electrolyte lies within a range shown by an equation 1.

$$1 < \text{DEGREE OF SWELLING} = \frac{\text{WEIGHT OF ORGANIC POLYMER AFTER IMPREGNATION OF ORGANIC ELECTROLYTE}}{\text{WEIGHT OF ORGANIC POLYMER BEFORE IMPREGNATION OF ORGANIC ELECTROLYTE}} \leqq 2$$

…(EQUATION 1)

**11.** A polymer electrolyte battery as set forth in claim 9, in which a quantity of the organic electrolyte held in the micropores of organic polymer is larger than a quantity of the organic electrolyte held by swelling in the skeleton of organic polymer.

**12.** A polymer electrolyte battery as set forth in claim 9, in which battery package is composed of a composite film comprising a metal foil and an adhesive resin.

**13.** In a manufacturing method for a polymer electrolyte battery having as its composition material a polymer electrolyte provided with a structure in which an organic electrolyte is held in an organic polymer, the manufacturing method includes;

a containing process in which a polymer electrolyte provided with following structures (i) through (iii) is contained in at least one of a positive electrode, a negative electrode and a separator, and an organic electrolyte is contained in the other components,

(i) A skeleton of the organic polymer has a crosslink structure.
(ii) The organic polymer has a microporous structure.
(iii) The organic electrolyte is held by swelling in the skeleton of organic polymer and also held in micropores.

a laminating process in which an electrode group is composed by the positive electrode, the negative electrode and the separator, and

an assembling process in which the electrode group is assembled in a battery container.

**14.** In a manufacturing method for a polymer electrolyte battery having as its composition material a polymer electrolyte provided with a structure in which an organic electrolyte is held in an organic polymer, the manufacturing method includes;

a containing process in which an organic polymer provided with following structures (i) through (ii) is contained in at least one of a positive electrode, a negative electrode and a separator,

(i) A skeleton of the organic polymer has a crosslink structure.
(ii) The organic polymer has a microporous structure.

a laminating process in which an electrode group is composed by the positive electrode, the negative electrode and the separator,

an impregnating process in which the organic electrolyte is impregnated in the electrode group, and thereby the organic electrolyte is held by swelling in the skeleton of organic polymer provided with the structures (i) and (ii) and also held in micropores of the organic polymer, and

an assembling process in which the electrode group is assembled in a battery container.

Fig.1

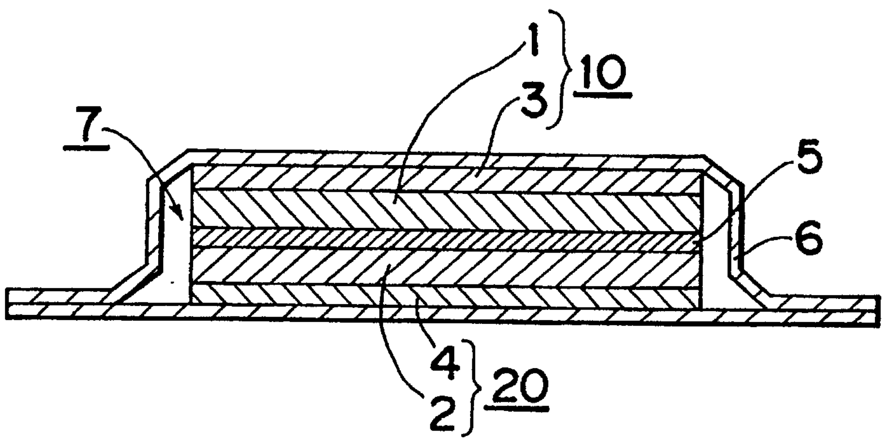
1
3
10
7
5
6
4
2
20

Fig.2

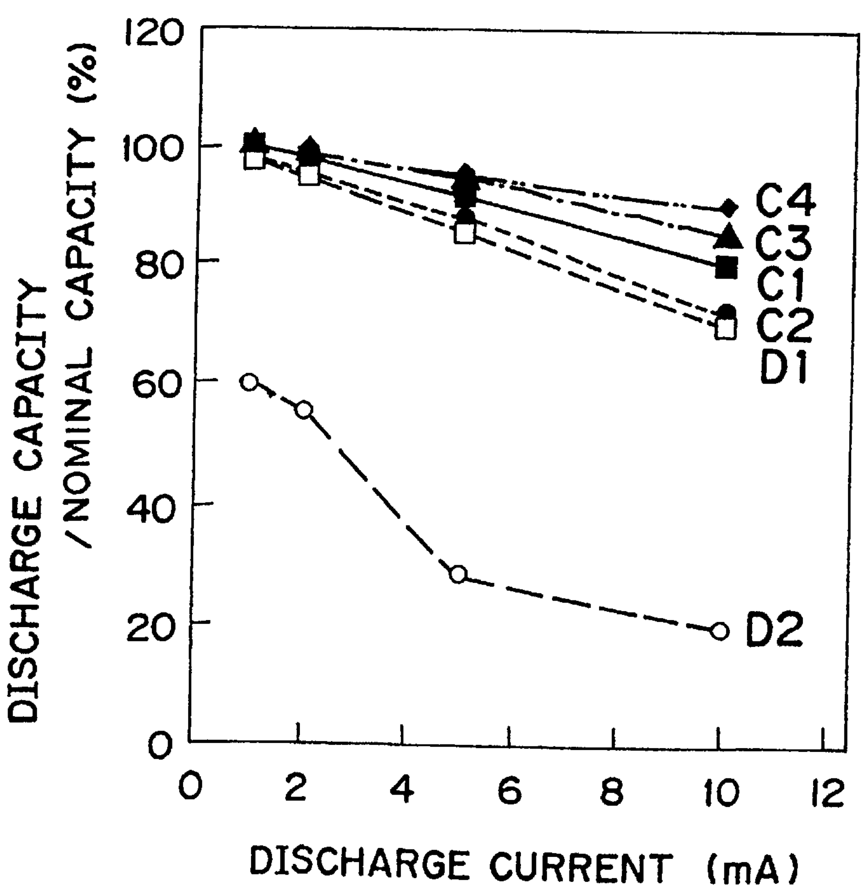
DISCHARGE CAPACITY /NOMINAL CAPACITY (%)
120
100
80
60
40
20
0
0
2
4
6
8
10
12
DISCHARGE CURRENT (mA)
C4
C3
C1
C2
D1
D2

*Fig.3*

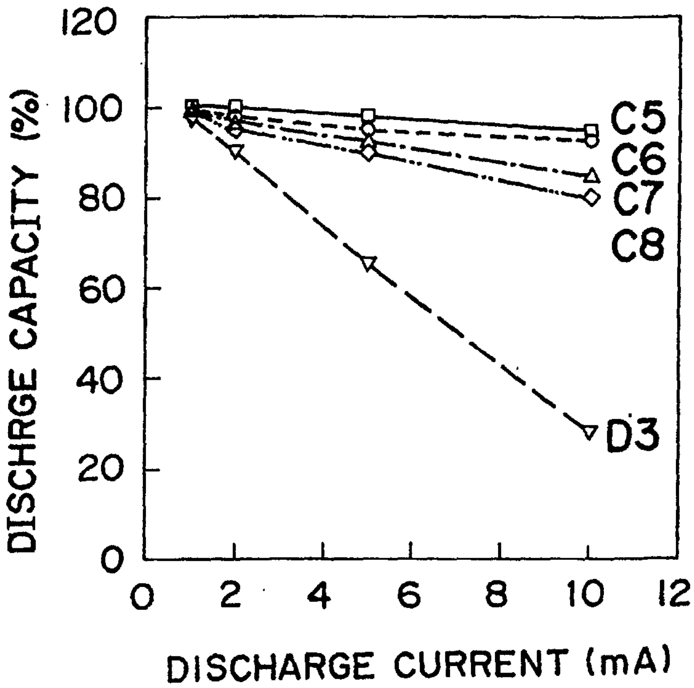
120
100
80
60
40
20
0
DISCHRGE CAPACITY (%)
0
2
4
6
8
10
12
DISCHARGE CURRENT (mA)
C5
C6
C7
C8
D3

*Fig.4*

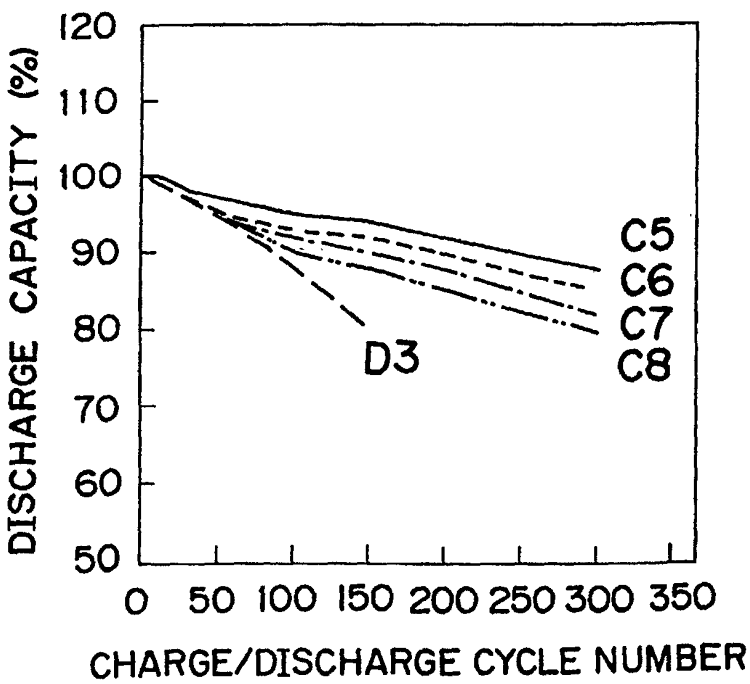
120
110
100
90
80
70
60
50
DISCHARGE CAPACITY (%)
0
50
100
150
200
250
300
350
CHARGE/DISCHARGE CYCLE NUMBER
C5
C6
C7
C8
D3

Fig.5

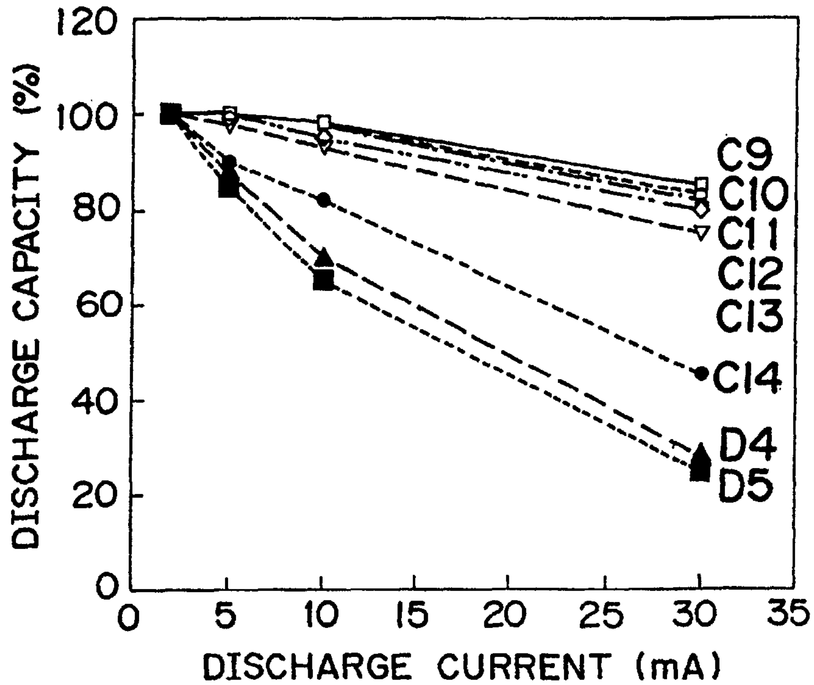
DISCHARGE CAPACITY (%)
120
100
80
60
40
20
0
0
5
10
15
20
25
30
35
DISCHARGE CURRENT (mA)
C9
C10
C11
C12
C13
C14
D4
D5

Fig.6

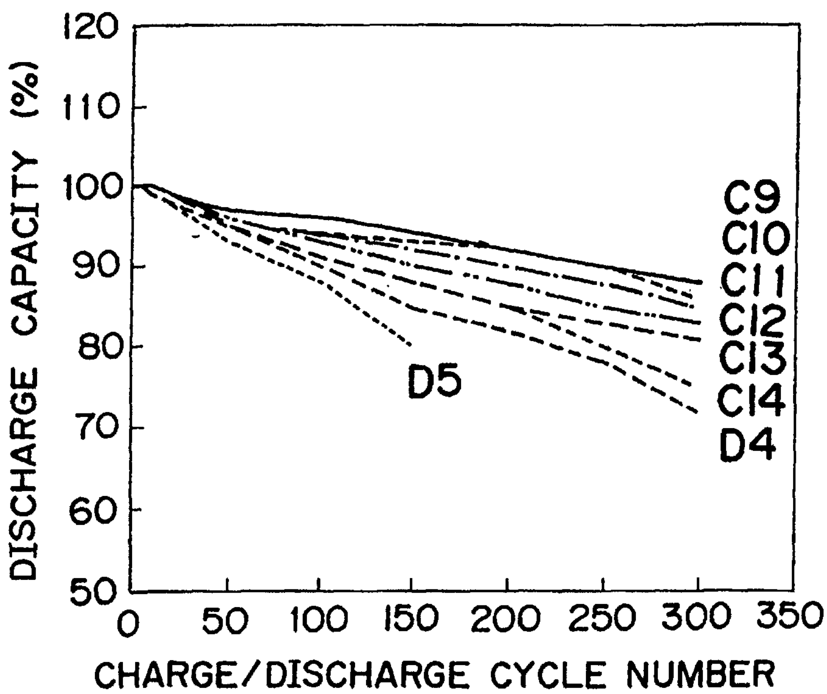
DISCHARGE CAPACITY (%)
120
110
100
90
80
70
60
50
0
50
100
150
200
250
300
350
CHARGE/DISCHARGE CYCLE NUMBER
C9
C10
C11
C12
C13
C14
D4
D5

*Fig.7*

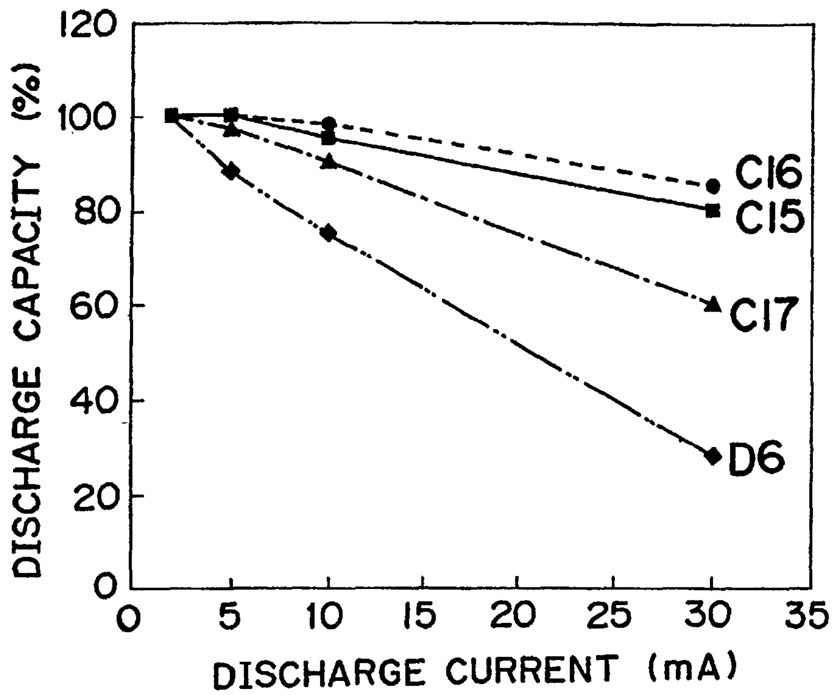

DISCHARGE CAPACITY (%)
120
100
80
60
40
20
0
0
5
10
15
20
25
30
35
DISCHARGE CURRENT (mA)
C16
C15
C17
D6


*Fig.8*

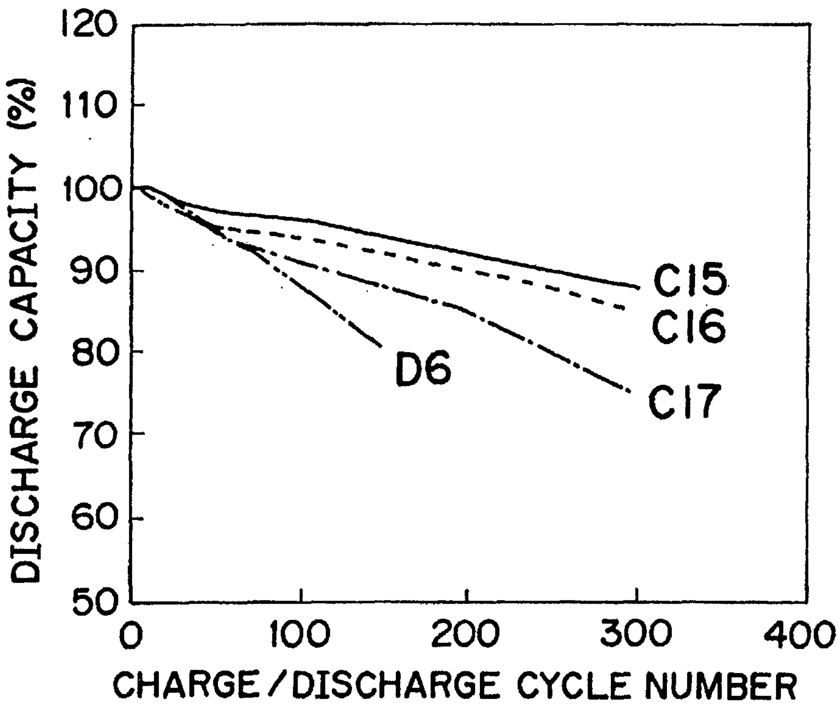

DISCHARGE CAPACITY (%)
120
110
100
90
80
70
60
50
0
100
200
300
400
CHARGE/DISCHARGE CYCLE NUMBER
C15
C16
C17
D6

## INTERNATIONAL SEARCH REPORT

International application No.
PCT/JP00/03259

A. CLASSIFICATION OF SUBJECT MATTER
Int.Cl$^7$ H01M10/40, 2/16

According to International Patent Classification (IPC) or to both national classification and IPC

B. FIELDS SEARCHED

Minimum documentation searched (classification system followed by classification symbols)
Int.Cl$^7$ H01M10/36-10/40, 2/14-2/18

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2000 |
| Kokai Jitsuyo Shinan Koho | 1971-2000 | Toroku Jitsuyo Shinan Koho | 1994-2000 |

Electronic data base consulted during the international search (name of data base and, where practicable, search terms used)
CA, JICST

C. DOCUMENTS CONSIDERED TO BE RELEVANT

| Category* | Citation of document, with indication, where appropriate, of the relevant passages | Relevant to claim No. |
|---|---|---|
| X | JP, 11-135149, A (Japan Storage Battery Co., Ltd.), 21 May, 1999 (21.05.99), Claim 1 (Family: none) | 1-3,9-14 |
| X | JP, 10-247521, A (Japan Storage Battery Co., Ltd.), 14 September, 1998 (14.09.98), Claim 1 (Family: none) | 1-3,9-14 |
| X<br>Y | JP, 10-223044, A (Mitsui Chemicals, Ltd.), 21 August, 1998 (21.08.98), Claims 1, 13 (Family: none) | 4,6<br>7,8 |
| Y | JP, 10-188984, A (Ricoh Company, Ltd.), 21 July, 1998 (21.07.98), Claim 1; Column 7, line 44 to Column 8, line 7 (Family: none) | 7,8 |
| X | JP, 11-40132, A (SHOWA DENKO K.K.), 12 February, 1999 (12.02.99), Claims 8, 9; Column 15, line 42 to Column 16, line 14 (Family: none) | 5-8 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 August, 2000 (15.08.00) | 29 August, 2000 (29.08.00) |
| Name and mailing address of the ISA/<br>Japanese Patent Office | Authorized officer |
| Facsimile No. | Telephone No. |

Form PCT/ISA/210 (second sheet) (July 1992)